# EUROPEAN PATENT APPLICATION

(11) **EP 3 147 842 A1**
(43) Date of publication of application: **29.03.2017**
(21) Application number: 16169052.4
(22) Date of filing: 10.05.2016
(51) Int. Cl.: G06Q 10/10

(54) **METHODS, DEVICES AND SYSTEMS FOR MANAGING CALENDAR DATA**

(30) Priority: 28.09.2015 CN 201510628262
(71) Applicant: Xiaomi Inc., Beijing 100085 (CN)
(72) Inventor: HU, Shan, 100085 BEIJING (CN); ZHANG, Peng, 100085 BEIJING (CN); LIU, Shaohui, 100085 BEIJING (CN)
(74) Representative: Underwood, Nicolas Patrick

(57) **Abstract**

The present invention relates to methods, devices and systems for managing calendar data, which pertains to the field of electronics technology application. The method includes: receiving (201) shared calendar data distributed by a first calendar client terminal, the shared calendar data being obtained by the first calendar client terminal modifying original calendar data displayed on the first calendar client terminal; and pushing (202) the shared calendar data to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal. inventioninvention

## Description

### TECHNICAL FIELD

The present invention generally relates to the field of electronics technology application, and more particularly, to methods, devices and systems for managing calendar data.

### BACKGROUND

A calendar client terminal is a client terminal for a user to consult a calendar, which can be installed on a smart terminal such as a smart phone, a tablet, a terminal on board a vehicle, etc. and provides a calendar data managing function to the user. Where, calendar data can include date data and event data, and the event data for indicating an event occurring on a date corresponds to the date data.

The calendar client terminal can present a calendar to the user, and each date in the calendar corresponds to a date page (also referred to as a calendar cell). In the related art, the user can add event data of an event to be handled to a calendar cell corresponding to the event date, and set a reminder, for the calendar client terminal to remind the user at a designated moment. Where, the event data can include time data for indicating a moment when the event in the event data will occur. The designated moment can be two hours before the moment when the event will occur. For example, a student can add data about campus recruitment propaganda into a calendar cell corresponding to the date of the propaganda, and set a reminder, for the calendar client terminal to remind the student to attend the campus recruitment at a designated moment.

### SUMMARY

In order to achieve an effect of improving the accuracy in calendar data management, the present invention provides methods and devices for managing calendar data. The technical solutions are as follows.

According to a first aspect of embodiments of the present invention, there is provided a method for managing calendar data, including:
receiving shared calendar data distributed by a first calendar client terminal, the shared calendar data being obtained by the first calendar client terminal modifying original calendar data displayed on the first calendar client terminal; and
pushing the shared calendar data to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal,
wherein the second calendar client terminal is a calendar client terminal logged in by a second user account, the first calendar client terminal is a calendar client terminal logged in by a first user account, and the second user account is associated with the first user account.

In a particular embodiment, the original calendar data is obtained by the first calendar client terminal updating first original calendar data with third calendar data, the third calendar data is obtained by a third calendar client terminal adding corresponding event data to a designated date page on a calendar interface displayed on the third calendar client terminal and distributed to a server for the server to push the third original calendar data to the first calendar client terminal,
the first original calendar data is obtained by the first calendar client terminal adding corresponding event data to a designated date page on a calendar interface displayed on the first calendar client terminal,
the original calendar data contains date data and event data, and the event data indicates an event occurring on a date corresponding to the date data, and
before the shared calendar data distributed by a first calendar client terminal is received, the method further includes:
receiving the third original calendar data distributed by the third calendar client terminal, the third calendar client terminal is logged in by a user account associated with the first user account; and
pushing the third original calendar data to the first calendar client terminal.

In a particular embodiment, the original calendar data is obtained by the first calendar client terminal adding corresponding event data to a designated date page on a calendar interface displayed on the first calendar client terminal, and
the original calendar data contains date data and the event data, and the event data indicates an event occurring on a date corresponding to the date data.

Before the shared calendar data is pushed to the second calendar client terminal, the method further includes:
acquiring the second user account associated with the first user account.

In a particular embodiment, acquiring the second user account associated with the first user account includes:
acquiring a subscribed account to which the first user account subscribes;
acquiring another user account which subscribes to the subscribed account, said another user account is a user account other than the first user account; and
taking said another user account as the second user account.

In a particular embodiment, acquiring the second user account associated with the first user account includes:
acquiring a user account which subscribes to the first account; and
taking the user account which subscribes to the first account as the second user account.

In a particular embodiment, acquiring the second user account associated with the first user account includes:
searching a preset user account association list based on the first user account, the user account association list recording association relationship among user accounts; and
taking a user account searched from the user account association list and associated with the first user account, as the second user account.

According to a second aspect of embodiments of the present invention, there is provided a method for managing calendar data, including:
displaying original calendar data;
receiving an updating instruction for updating the original calendar data;

according to the updating instruction, modifying a component of the original calendar data which is instructed by the updating instruction, to obtain shared calendar data;
distributing the shared calendar data to a server, for the server to push the shared calendar data to a second calendar client terminal,
wherein the second calendar client terminal is a calendar client terminal logged in by a second user account, a first calendar client terminal is a calendar client terminal logged in by a first user account, and the second user account is associated with the first user account.

In a particular embodiment, according to the updating instruction, modifying a component of the original calendar data which is instructed by the updating instruction to obtain shared calendar data includes:
displaying a prompt message for prompting a user to modify the component in the original calendar data which is instructed by the updating instruction; and
upon receiving a confirmation instruction for confirming modification which is triggered by the user, modifying the component in the original calendar data which is instructed by the updating instruction.

In a particular embodiment, the original calendar data contains date data and event data, and the event data indicates an event occurring on a date corresponding to the date data, and
according to the updating instruction, modifying a component of the original calendar data which is instructed by the updating instruction to obtain shared calendar data includes:
modifying at least one of the date data and the event data according to the updating instruction.

In a particular embodiment, before the original calendar data is displayed, the method further includes:
receiving third original calendar data pushed by the server,
wherein the third original calendar data is obtained by a third calendar client terminal adding corresponding event data to a designated date page on a calendar interface displayed on the third calendar client terminal and distributed to a server for the server, and
the third calendar client terminal is logged in by a user account associated with the first user account.

In a particular embodiment, after the third original calendar data pushed by the server is received, the method further includes:
updating first original calendar data with the third original calendar data, to obtain the original calendar data,
wherein the first original calendar data is obtained by the first calendar client terminal adding corresponding event data to a designated date page on a calendar interface displayed on the first calendar client terminal.

In a particular embodiment, updating first original calendar data with the third original calendar data, to obtain the original calendar data includes:
replacing the first original calendar data with the third original calendar data, to obtain the original calendar data.

In a particular embodiment, updating first original calendar data with the third original calendar data, to obtain the original calendar data includes:
incorporating the third original calendar data into the first original calendar data, to obtain the original calendar data.

In a particular embodiment, before the original calendar data is displayed, the method further includes:
adding corresponding event data to a designated date page on a calendar interface displayed on the first calendar client terminal, to obtain the original calendar data.

According to a third aspect of embodiments of the present invention, there is provided a method for managing calendar data, including:
receiving shared calendar data pushed by a server, the shared calendar data being pushed by the server to a second calendar client terminal after the server receives the shared calendar data distributed by a first calendar client terminal, the second calendar client terminal being a calendar client terminal logged in by a second user account, the first calendar client terminal being a calendar client terminal logged in by a first user account, the second user account being associated with the first user account, and the shared calendar data being obtained by the first calendar client terminal modifying original calendar data displayed on the first calendar client terminal; and
updating second original calendar data with the shared calendar data, the second original calendar data being obtained by the second calendar client terminal adding corresponding event data to a designated date page on a calendar interface displayed on the second calendar client terminal.

In a particular embodiment, updating the second original calendar data with the shared calendar data includes:
replacing the second original calendar data with the shared calendar data.

In a particular embodiment, updating the second original calendar data with the shared calendar data includes:
incorporating the shared calendar data into the second original calendar data.

According to a fourth aspect of embodiments of the present invention, there is provided a device for managing calendar data, including:
a first receiving module configured to receive shared calendar data distributed by a first calendar client terminal, the shared calendar data being obtained by the first calendar client terminal modifying original calendar data displayed on the first calendar client terminal; and
a first pushing module configured to push the shared calendar data to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal,
wherein the second calendar client terminal is a calendar client terminal logged in by a second user account, the first calendar client terminal is a calendar client terminal logged in by a first user account, and the second user account is associated with the first user account.

In a particular embodiment, the original calendar data is obtained by the first calendar client terminal updating first original calendar data with third calendar data, the third calendar data is obtained by a third calendar client terminal adding corresponding event data to a designated date page on a calendar interface displayed on the third calendar client terminal and distributed to a server for the server to push the third original calendar data to the first calendar client terminal,
the first original calendar data is obtained by the first calendar client terminal adding corresponding event data to a designated date page on a calendar interface displayed on the first calendar client terminal,
the original calendar data contains date data and event data, and the event data indicates an event occurring on a date corresponding to the date data, and
the device further includes:
a second receiving module configured to receive the third original calendar data distributed by the third calendar client terminal, the third calendar client terminal is logged in by a user account associated with the first user account; and
a second pushing module configured to push the third original calendar data to the first calendar client terminal.

In a particular embodiment, the original calendar data is obtained by the first calendar client terminal adding corresponding event data to a designated date page on a calendar interface displayed on the first calendar client terminal, and
the original calendar data contains date data and the event data, and the event data indicates an event occurring on a date corresponding to the date data.

In a particular embodiment, the device further includes:
an acquiring module configured to acquire the second user account associated with the first user account.

In a particular embodiment, the acquiring module is configured to:
acquire a subscribed account to which the first user account subscribes;
acquire another user account which subscribes to the subscribed account, said another user account is a user account other than the first user account; and
take said another user account as the second user account.

In a particular embodiment, the acquiring module is configured to:
acquire a user account which subscribes to the first account; and
take the user account which subscribes to the first account as the second user account.

In a particular embodiment, the acquiring module is configured to:
search a preset user account association list based on the first user account, the user account association list recording association relationship among user accounts; and
take a user account searched from the user account association list and associated with the first user account, as the second user account.

According to a fifth aspect of embodiments of the present invention, there is provided a device for managing calendar data, including:
a displaying module configured to display original calendar data;
a first receiving module configured to receive an updating instruction for updating the original calendar data;
a modifying module configured to, according to the updating instruction, modify a component of the original calendar data which is instructed by the updating instruction, to obtain shared calendar data;
a distributing module configured to distribute the shared calendar data to a server, for the server to push the shared calendar data to a second calendar client terminal,
wherein the second calendar client terminal is a calendar client terminal logged in by a second user account, a first calendar client terminal is a calendar client terminal logged in by a first user account, and the second user account is associated with the first user account.

In a particular embodiment, the modifying module is configured to:
display a prompt message for prompting a user to modify the component in the original calendar data which is instructed by the updating instruction; and
upon a confirmation instruction for confirming modification which is triggered by the user being received, modify the component in the original calendar data which is instructed by the updating instruction.

In a particular embodiment, the original calendar data contains date data and event data, and the event data indicates an event occurring on a date corresponding to the date data, and
the modifying module is configured to modify at least one of the date data and the event data according to the updating instruction.

In a particular embodiment, the device further includes:
a second receiving module configured to receive third original calendar data pushed by the server,
wherein the third original calendar data is obtained by a third calendar client terminal adding corresponding event data to a designated date page on a calendar interface displayed on the third calendar client terminal and distributed to a server for the server, and
the third calendar client terminal is logged in by a user account associated with the first user account.

In a particular embodiment, the device further includes:
an updating module configured to update first original calendar data with the third original calendar data, to obtain the original calendar data,
wherein the first original calendar data is obtained by the first calendar client terminal adding corresponding event data to a designated date page on a calendar interface displayed on the first calendar client terminal.

In a particular embodiment, the updating module is configured to:
replace the first original calendar data with the third original calendar data, to obtain the original calendar data.

In a particular embodiment, the updating module is configured to:
incorporate the third original calendar data into the first original calendar data, to obtain the original calendar data.

In a particular embodiment, the device further includes:
an adding module configured to add corresponding event data to a designated date page on a calendar interface displayed on the first calendar client terminal, to obtain the original calendar data.

According to a sixth aspect of embodiments of the present invention, there is provided a device for managing calendar data, including:
a receiving module configured to receive shared calendar data pushed by a server, the shared calendar data being pushed by the server to a second calendar client terminal after the server receives the shared calendar data distributed by a first calendar client terminal, the second calendar client terminal being a calendar client terminal logged in by a second user account, the first calendar client terminal being a calendar client terminal logged in by a first user account, the second user account being associated with the first user account, and the shared calendar data being obtained by the first calendar client terminal modifying original calendar data displayed on the first calendar client terminal; and
an updating module configured to update second original calendar data with the shared calendar data, the second original calendar data being obtained by the second calendar client terminal adding corresponding event data to a designated date page on a calendar interface displayed on the second calendar client terminal.

In a particular embodiment, the updating module is configured to:
replace the second original calendar data with the shared calendar data.

In a particular embodiment, the updating module is configured to:
incorporate the shared calendar data into the second original calendar data.

According to a seventh aspect of embodiments of the present invention, there is provided a device for managing calendar data, including:
a processor; and
a memory for storing instructions executable by the processor;
wherein the processor is configured to perform:
receiving shared calendar data distributed by a first calendar client terminal, the shared calendar data being obtained by the first calendar client terminal modifying original calendar data displayed on the first calendar client terminal; and
pushing the shared calendar data to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal,
wherein the second calendar client terminal is a calendar client terminal logged in by a second user account, the first calendar client terminal is a calendar client terminal logged in by a first user account, and the second user account is associated with the first user account.

According to an eighth aspect of embodiments of the present invention, there is provided a device for managing calendar data, including:
a processor; and
a memory for storing instructions executable by the processor;
wherein the processor is configured to perform:
displaying original calendar data;
receiving an updating instruction for updating the original calendar data;
according to the updating instruction, modifying a component of the original calendar data which is instructed by the updating instruction, to obtain shared calendar data;
distributing the shared calendar data to a server, for the server to push the shared calendar data to a second calendar client terminal,
wherein the second calendar client terminal is a calendar client terminal logged in by a second user account, a first calendar client terminal is a calendar client terminal logged in by a first user account, and the second user account is associated with the first user account.

According to a ninth aspect of embodiments of the present invention, there is provided a device for managing calendar data, including:
a processor; and
a memory for storing instructions executable by the processor;
wherein the processor is configured to perform:
receiving shared calendar data pushed by a server, the shared calendar data being pushed by the server to a second calendar client terminal after the server receives the shared calendar data distributed by a first calendar client terminal, the second calendar client terminal being a calendar client terminal logged in by a second user account, the first calendar client terminal being a calendar client terminal logged in by a first user account, the second user account being associated with the first user account, and the shared calendar data being obtained by the first calendar client terminal modifying original calendar data displayed on the first calendar client terminal; and
updating second original calendar data with the shared calendar data, the second original calendar data being obtained by the second calendar client terminal adding corresponding event data to a designated date page on a calendar interface displayed on the second calendar client terminal.

According to a tenth aspect of embodiments of the present invention, there is provided a system for managing calendar data, including: a server, a first calendar client terminal and a second calendar client terminal, wherein
the server is a device for managing calendar data of the fourth aspect or any optional embodiment of the fourth aspect;
the first calendar client terminal is a device for managing calendar data of the fifth aspect or any optional embodiment of the fifth aspect; and
the second calendar client terminal is a device for managing calendar data of the sixth aspect or any optional embodiment of the sixth aspect.

According to an eleventh aspect of embodiments of the present invention, there is provided a system for managing calendar data, including: a server, a first calendar client terminal and a second calendar client terminal, wherein
the server is a device for managing calendar data of the seventh aspect;
the first calendar client terminal is a device for managing calendar data of the eighth aspect; and
the second calendar client terminal is a device for managing calendar data of the ninth aspect.

The technical solution according to embodiments of the present invention may have the following beneficial effects.

In the methods, the devices and the systems for managing calendar data provided by the present invention, the server receives shared calendar data distributed by the first calendar client terminal. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of an implementation environment involved in the methods for managing calendar data provided by embodiments of the present invention;
Fig. 2 is a flow chart illustrating a method for managing calendar data according to an exemplary embodiment;
Fig. 3 is a flow chart illustrating a method for managing calendar data according to another exemplary embodiment;
Fig. 4 is a flow chart illustrating a method for managing calendar data according to still another exemplary embodiment;
Fig. 5A is a flow chart illustrating a method for managing calendar data according to yet still another exemplary embodiment;
Fig. 5B is a schematic diagram of a calendar interface displayed on a third client terminal provided by the embodiment as shown in Fig. 5A;
Fig. 5C is a schematic diagram of another calendar interface displayed on a third client terminal provided by the embodiment as shown in Fig. 5A;
Fig. 5D is a schematic diagram of a calendar interface displayed on a first client terminal provided by the embodiment as shown in Fig. 5A;
Fig. 5E is a schematic diagram of another calendar interface displayed on a first client terminal provided by the embodiment as shown in Fig. 5A;
Fig. 5F is a schematic diagram of still another calendar interface displayed on a first client terminal provided by the embodiment as shown in Fig. 5A;
Fig. 5G is a flow chart illustrating a process of a first calendar client terminal, according to an updating instruction, modifying a component of an original calendar data which is instructed by the updating instruction to obtain shared calendar data, provided by the embodiment as shown in Fig. 5A;
Fig. 5H is a schematic diagram of a prompting interface displayed on a first client terminal provided by the embodiment as shown in Fig. 5A;
Fig. 5I is a schematic diagram of an interface displayed on a first client terminal after original calendar data is updated, provided by the embodiment as shown in Fig. 5A;
Fig. 5J is a flow chart illustrating a process of a server acquiring a second user account associated with a first user account, provided by the embodiment as shown in Fig. 5A;
Fig. 5K is a flow chart illustrating another process of a server acquiring a second user account associated with a first user account, provided by the embodiment as shown in Fig. 5A;
Fig. 5L is a flow chart illustrating still another process of a server acquiring a second user account associated with a first user account, provided by the embodiment as shown in Fig. 5A;
Fig. 6 is a block diagram of a device for managing calendar data according to an exemplary embodiment;
Fig. 7 is a block diagram of another device for managing calendar data according to an exemplary embodiment;
Fig. 8 is a block diagram of a device for managing calendar data according to another exemplary embodiment;
Fig. 9 is a block diagram of another device for managing calendar data according to another exemplary embodiment;
Fig. 10 is a block diagram of a device for managing calendar data according to still another exemplary embodiment;
Fig. 11 is a block diagram of a device for managing calendar data according to an exemplary embodiment;
Fig. 12 is a block diagram of a device for managing calendar data according to another exemplary embodiment;
Fig. 13 is a block diagram of a device for managing calendar data according to still another exemplary embodiment; and
Fig. 14 is a block diagram of a system for managing calendar data according to an exemplary embodiment.

### DETAILED DESCRIPTION

In order to make objectives, technical solutions and advantages of the present invention more clear, the present invention will be described in detail with reference to the accompanying drawings. It is apparent that, the described embodiments are not all of the embodiments of the present invention, only a part of them. Based on the embodiments of the present invention, other embodiments obtained without paying any creative labor by one of ordinary skilled in the art all belong to the protective scope of the present invention.

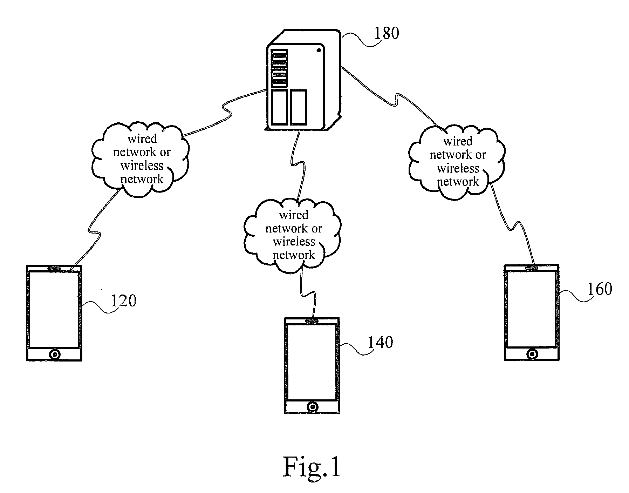

Fig. 1 is a schematic diagram of an implementation environment involved in the methods for managing calendar data provided by embodiments of the present invention. As shown in Fig. 1, the implementation environment includes a first terminal 120, a second terminal 140, a third terminal 160 and a server 180. Where, the first terminal 120, the second terminal 140 and the third terminal 160 can respectively connected to the server 180 via a wired network or a wireless network including but not limited to Wireless Fidelity (briefly referred to as WIFI), Blue Tooth, Infrared, Zigbee, Data, and the first terminal 120, the second terminal 140 and the third terminal 160 can be connected to one another via a wired network or a wireless network (not shown in the Figure). This is not limited by the embodiment of the present invention.

In the embodiment of the present invention, the first terminal 120 is installed with a first calendar client terminal, and the first terminal 120 manages calendar data through the first calendar client terminal. The second terminal 140 is installed with a second calendar client terminal, and the second terminal 140 manages calendar data through the second calendar client terminal. The third terminal 160 is installed with a third calendar client terminal, and the third terminal 160 manages calendar data through the third calendar client terminal. The first terminal 120, the second terminal 140 and the third terminal 160 can share calendar data via the server 180.

As an example, the third calendar client terminal can be logged in by a user account associated with a first user account which is a user account to log in the first calendar client terminal. The third calendar client terminal can add corresponding event data to a designated date page on a calendar interface displayed on the third calendar client terminal to obtain third original calendar data, and distribute the third original calendar data to the server 180.

The server 180 can receive the third original calendar data distributed by the third calendar client terminal, and push the third original calendar data to the first calendar client terminal, for the first calendar client terminal updates first original calendar data with the third original calendar data, to obtain original calendar data. The first original calendar data is obtained by the first calendar client terminal adding corresponding event data to a designated date page on a calendar interface displayed on the first calendar client terminal. Where, the first calendar client terminal can be logged in by a user account which is a first user account, and the third calendar client terminal can be logged in by a user account associated with a first user account. The server 180 can store the association relationship among user accounts, and push the calendar data according to the association relationship among user accounts.

The first calendar client terminal can display the original calendar data, and receive an updating instruction with respect to the original calendar data which is triggered by the user. According to the updating instruction, the first calendar client terminal can modify a component of the original calendar data which is instructed by the updating instruction to obtain shared calendar data and distribute the shared calendar data to the server. Optionally, the original calendar data displayed on the first calendar client terminal can be obtained by updating first original calendar data with the third original calendar data pushed by the third calendar client terminal. Where, the first original calendar data is obtained by the first calendar client terminal adding corresponding event data to a designated date page on a calendar interface displayed on the first calendar client terminal. Alternatively, the original calendar data displayed on the first calendar client terminal can also be obtained by the first calendar client terminal adding corresponding event data to a designated date page on a calendar interface displayed on the first calendar client terminal. This is not limited by the embodiment of the present invention. Optionally, the first calendar client terminal updating the first original calendar data with the third original calendar data can include: the first calendar client terminal replacing the first original calendar data with the third original calendar data to obtain the original calendar data, or the first calendar client terminal incorporating the third original calendar data into the first original calendar data to obtain the original calendar data. Optionally, the first calendar client terminal, according to the updating instruction, modifying a component of the original calendar data which is instructed by the updating instruction to obtain shared calendar data can include: the first calendar client terminal displaying a prompt message for prompting a user to modify the component in the original calendar data which is instructed by the updating instruction; and upon receiving a confirmation instruction for confirming modification which is triggered by the user, the first calendar client terminal modifying the component in the original calendar data which is instructed by the updating instruction. Where, the original calendar data can contain date data and event data, and the first calendar client terminal can modify at least one of the date data and the event data according to the updating instruction

The server 180 can receive shared calendar data distributed by the first calendar client terminal, push the shared calendar data to the second calendar client terminal, such that the first calendar client terminal can update first original calendar data with third original calendar data to get the original calendar data. The second calendar client terminal is a calendar client terminal logged in by a second user account, the first calendar client terminal is a calendar client terminal logged in by a first user account, and the second user account is associated with the first user account. Optionally, before pushing the shared calendar data to the second calendar client terminal, the server 180 can acquire the second user account associated with the first user account. Where, the server 180 acquiring the second user account associated with the first user account can include: the server 180 acquiring a subscribed account to which the first user account subscribes; acquiring another user account which subscribes to the subscribed account, said another user account is a user account other than the first user account; and taking said another user account as the second user account. That is, the server 180 takes user accounts which subscribe to the same subscribed account as associated user accounts. Optionally, the server 180 acquiring the second user account associated with the first user account can also include: the server 180 acquiring a user account which subscribes to the first account; and taking the user account which subscribes to the first account as the second user account. That is, the server 180 takes a user accounts which subscribe to the first user account as a user account associated with the first user account. Optionally, the server 180 acquiring the second user account associated with the first user account can also include: the server 180 searching a preset user account association list based on the first user account, the user account association list recording association relationship among user accounts; and taking a user account searched from the user account association list and associated with the first user account, as the second user account. That is, the server 180 is provided with corresponding relationship among user accounts, and the server can acquire a user account associated with the first user account based on the corresponding relationship among user accounts. This is not limited by the embodiments of the present invention.

The second calendar client terminal can receive shared calendar data pushed by the server 180, and update the second original calendar data with the shared calendar data. The second original calendar data is obtained by the second calendar client terminal adding corresponding event data to a designated date page on a calendar interface displayed on the second calendar client terminal. Optionally, the second calendar client terminal updating the second original calendar data with the shared calendar data can include: the second calendar client terminal replacing the second original calendar data with the shared calendar data; or, the second calendar client terminal incorporating the shared calendar data into the second original calendar data. This is not limited by the embodiments of the present invention.

In the embodiments of the present invention, the first terminal 120, the second terminal 140 and the third terminal 160 can share calendar data through the server 180, to achieve the management of calendar data, thus improving the accuracy in calendar data management.

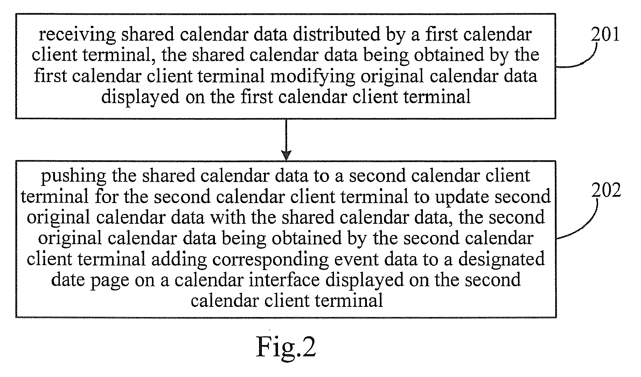

Fig. 2 is a flow chart illustrating a method for managing calendar data according to an exemplary embodiment. In the present embodiment, as an example, the method for managing calendar data is performed by the server 180 in the implementation environment of Fig. 1. As shown in Fig. 2, the method for managing calendar data includes the following steps.

In step 201, shared calendar data distributed by a first calendar client terminal is received, the shared calendar data being obtained by the first calendar client terminal modifying original calendar data displayed on the first calendar client terminal.

In step 202, the shared calendar data is pushed to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal.

Where, the second calendar client terminal is a calendar client terminal logged in by a second user account, the first calendar client terminal is a calendar client terminal logged in by a first user account, and the second user account is associated with the first user account.

Accordingly, in the method for managing calendar data provided by the embodiment of the present invention, the server receives shared calendar data distributed by the first calendar client terminal. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

Optionally, the original calendar data is obtained by the first calendar client terminal updating first original calendar data with third calendar data, the third calendar data is obtained by a third calendar client terminal adding corresponding event data to a designated date page on a calendar interface displayed on the third calendar client terminal and distributed to a server for the server to push the third original calendar data to the first calendar client terminal. The first original calendar data is obtained by the first calendar client terminal adding corresponding event data to a designated date page on a calendar interface displayed on the first calendar client terminal. The original calendar data contains date data and event data, and the event data indicates an event occurring on a date corresponding to the date data.

Before step 201, the method can also include:
receiving the third original calendar data distributed by the third calendar client terminal, the third calendar client terminal is logged in by a user account associated with the first user account; and
pushing the third original calendar data to the first calendar client terminal.

Optionally, the original calendar data is obtained by the first calendar client terminal adding corresponding event data to a designated date page on a calendar interface displayed on the first calendar client terminal. The original calendar data contains date data and the event data, and the event data indicates an event occurring on a date corresponding to the date data.

Optionally, before step 202, the method can also include:
acquiring the second user account associated with the first user account.

Optionally, acquiring the second user account associated with the first user account can include:
acquiring a subscribed account to which the first user account subscribes;
acquiring another user account which subscribes to the subscribed account, said another user account is a user account other than the first user account; and
taking said another user account as the second user account.

Optionally, acquiring the second user account associated with the first user account can include:
acquiring a user account which subscribes to the first account; and
taking the user account which subscribes to the first account as the second user account.

Optionally, acquiring the second user account associated with the first user account can include:
searching a preset user account association list based on the first user account, the user account association list recording association relationship among user accounts; and
taking a user account searched from the user account association list and associated with the first user account, as the second user account

All the above optional technical solutions can be combined in any manner to obtain optional embodiments of the present invention, which will not be elaborated herein one by one.

Accordingly, in the method for managing calendar data provided by the embodiment of the present invention, the server receives shared calendar data distributed by the first calendar client terminal. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

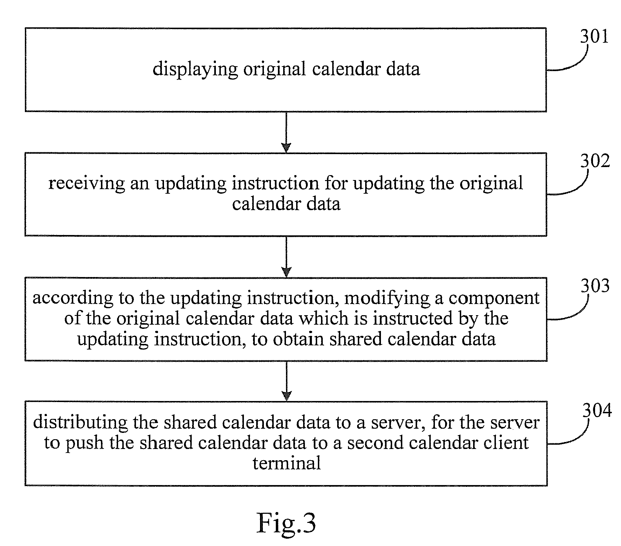

Fig. 3 is a flow chart illustrating a method for managing calendar data according to another exemplary embodiment. In the present embodiment, as an example, the method for managing calendar data is applied in the first calendar client terminal which is a calendar client terminal installed on the first terminal 120 in the implementation environment of Fig. 1. As shown in Fig. 3, the method for managing calendar data includes the following steps.

In step 301, original calendar data is displayed.

In step 302, an updating instruction for updating the original calendar data is received.

In step 303, according to the updating instruction, a component of the original calendar data which is instructed by the updating instruction is modified, to obtain shared calendar data.

In step 304, the shared calendar data is distributed to a server, for the server to push the shared calendar data to a second calendar client terminal.

Where, the second calendar client terminal is a calendar client terminal logged in by a second user account, a first calendar client terminal is a calendar client terminal logged in by a first user account, and the second user account is associated with the first user account.

Accordingly, in the method for managing calendar data provided by the embodiment of the present invention, the first calendar client terminal displays original calendar data; receives an updating instruction for updating the original calendar data; according to the updating instruction, modifies a component of the original calendar data which is instructed by the updating instruction, to obtain shared calendar data; and distributes the shared calendar data to a server, for the server to push the shared calendar data to a second calendar client terminal. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

Optionally, step 303 can include:
displaying a prompt message for prompting a user to modify the component in the original calendar data which is instructed by the updating instruction; and
upon receiving a confirmation instruction for confirming modification which is triggered by the user, modifying the component in the original calendar data which is instructed by the updating instruction.

Optionally, the original calendar data contains date data and event data, and the event data indicates an event occurring on a date corresponding to the date data.

Step 303 can include:
modifying at least one of the date data and the event data according to the updating instruction.

Optionally, before step 301, the method can also include:
receiving third original calendar data pushed by the server. The third original calendar data is obtained by a third calendar client terminal adding corresponding event data to a designated date page on a calendar interface displayed on the third calendar client terminal and distributed to a server for the server, and the third calendar client terminal is logged in by a user account associated with the first user account.

Optionally, after the third original calendar data pushed by the server is received, the method can also include:
updating first original calendar data with the third original calendar data, to obtain the original calendar data. The first original calendar data is obtained by the first calendar client terminal adding corresponding event data to a designated date page on a calendar interface displayed on the first calendar client terminal.

Optionally, updating first original calendar data with the third original calendar data, to obtain the original calendar data includes:
replacing the first original calendar data with the third original calendar data, to obtain the original calendar data.

Optionally, updating first original calendar data with the third original calendar data, to obtain the original calendar data includes:
incorporating the third original calendar data into the first original calendar data, to obtain the original calendar data.

Optionally, before step 301, the method can also include:
adding corresponding event data to a designated date page on a calendar interface displayed on the first calendar client terminal, to obtain the original calendar data.

All the above optional technical solutions can be combined in any manner to obtain optional embodiments of the present invention, which will not be elaborated herein one by one.

Accordingly, in the method for managing calendar data provided by the embodiment of the present invention, the first calendar client terminal displays original calendar data; receives an updating instruction for updating the original calendar data; according to the updating instruction, modifies a component of the original calendar data which is instructed by the updating instruction, to obtain shared calendar data; and distributes the shared calendar data to a server, for the server to push the shared calendar data to a second calendar client terminal. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

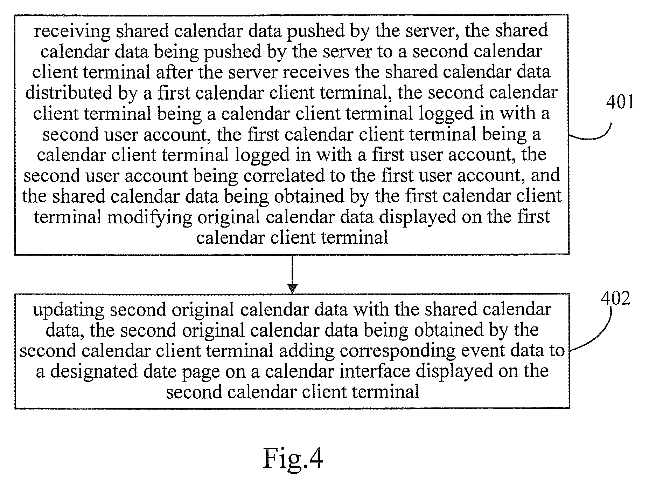

Fig. 4 is a flow chart illustrating a method for managing calendar data according to another exemplary embodiment. In the present embodiment, as an example, the method for managing calendar data is applied in the second calendar client terminal which is a calendar client terminal installed on the second terminal 140 in the implementation environment of Fig. 1. As shown in Fig. 4, the method for managing calendar data includes the following steps.

In step 401, shared calendar data pushed by the server is received, the shared calendar data being pushed by the server to a second calendar client terminal after the server receives the shared calendar data distributed by a first calendar client terminal, the second calendar client terminal being a calendar client terminal logged in by a second user account, the first calendar client terminal being a calendar client terminal logged in by a first user account, the second user account being associated with the first user account, and the shared calendar data being obtained by the first calendar client terminal modifying original calendar data displayed on the first calendar client terminal.

In step 402, second original calendar data is updated with the shared calendar data, the second original calendar data being obtained by the second calendar client terminal adding corresponding event data to a designated date page on a calendar interface displayed on the second calendar client terminal.

Accordingly, in the method for managing calendar data provided by the embodiment of the present invention, the second calendar client terminal receives shared calendar data pushed by the server, and updates second original calendar data with the shared calendar data. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

Optionally, step 402 can include:
replacing the second original calendar data with the shared calendar data.

Optionally, step 402 can include:
incorporating the shared calendar data into the second original calendar data.

All the above optional technical solutions can be combined in any manner to obtain optional embodiments of the present invention, which will not be elaborated herein one by one.

Accordingly, in the method for managing calendar data provided by the embodiment of the present invention, the second calendar client terminal receives shared calendar data pushed by the server, and updates second original calendar data with the shared calendar data. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

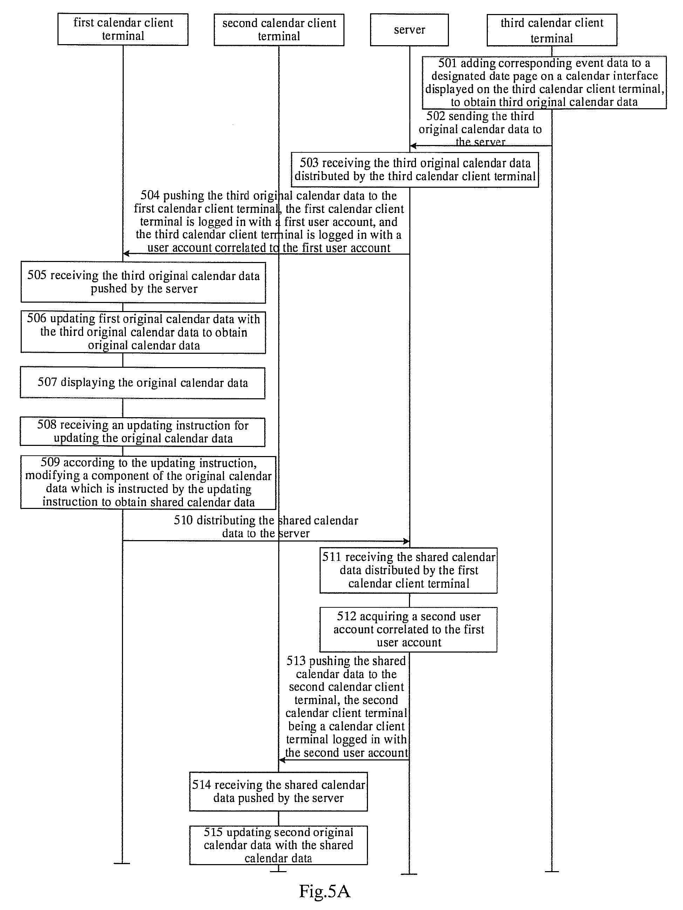

Fig. 5A is a flow chart illustrating a method for managing calendar data according to another exemplary embodiment. In the present embodiment, the method for managing calendar data is described as applied in the implementation environment shown in Fig. 1 as an example. Where, in the implementation environment as shown in Fig. 1, the first terminal 120 is installed with a first calendar client terminal, the second terminal 140 is installed with a second calendar client terminal and the third terminal 160 is installed with a third calendar client terminal. As shown in Fig. 5A, the method for managing calendar data can include the following steps.

In step 501, the third calendar client terminal adds corresponding event data to a designated date page on a calendar interface displayed on the third calendar client terminal, to obtain third original calendar data.

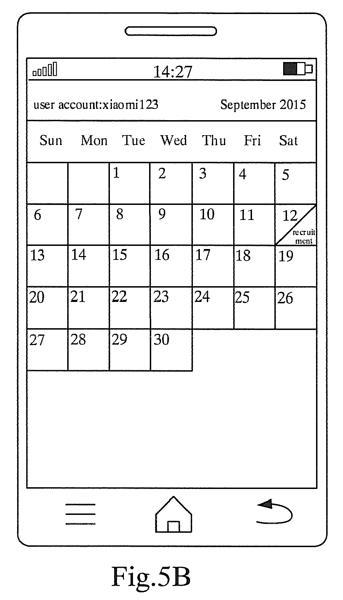

Where, the calendar interface displayed on the third calendar client terminal can be shown as in Fig. 5B. As shown in Fig. 5B, the third calendar client terminal is logged in by a current log-in user account: xiaomi123, and the calendar interface displayed on the third calendar client terminal is a calendar of September, 2015. In September of 2015, there are totally 30 dates, and each of the dates can correspond to a date page. The user of the third calendar client terminal can add corresponding event data to a designated date page on the calendar interface as shown in Fig. 5B, to obtain the third original calendar data. Where, the designated date can be a date when an event indicated by the event data will occur. The third original calendar data can include date data and event data. The event data is for indicating an event occurring on a date corresponding to the date data, meaning that the date indicated by the date data is the designated date. As an example, the user of the third calendar client terminal can add corresponding event data "3:30 pm, XX company holding recruitment in the school gym" to a date page corresponding to a date September 12, to obtain third original calendar data. Thus, the third original calendar data can be "3:30 pm on September 12, XX company holding recruitment in the school gym".

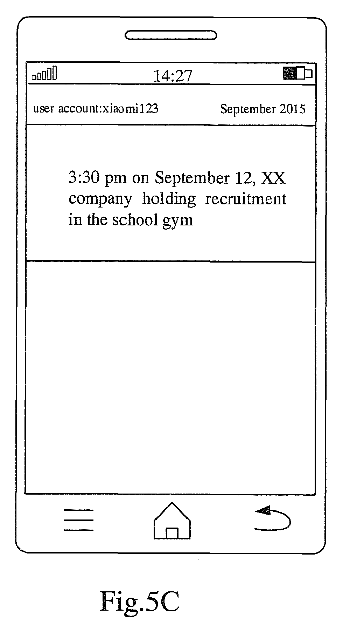

After the third calendar client terminal adds corresponding event data to a designated date page on a calendar interface displayed on the third calendar client terminal, to obtain the third original calendar data, the calendar interface displayed on the third calendar client terminal can display the third original calendar data. Optionally, the calendar interface displayed on the third calendar client terminal can display part of the third original calendar data. When the user of the third calendar client terminal clicks the part of the data, the calendar interface displayed on the third calendar client terminal will display the entire third original calendar data. For example, as shown in Fig. 5B, on the calendar interface displayed on the third calendar client terminal, "recruitment" is presented on the date page corresponding to September 12. When the user of the third calendar client terminal clicks the "recruitment", the calendar interface displayed on the third calendar client terminal will display the entire third original calendar data, as shown in Fig. 5C.

In step 502, the third calendar client terminal sends the third original calendar data to the server.

After the third calendar client terminal obtains the third original calendar data, the third calendar client terminal can distribute the third original calendar data to the server. As an example, the third calendar client terminal distributes the third original calendar data "3:30 pm on September 12, XX company holding recruitment in the school gym" to the server.

In step 503, the server receives the third original calendar data distributed by the third calendar client terminal.

When the third calendar client terminal distributes the third original calendar data to the server, the server can receives the third original calendar data distributed by the third calendar client terminal. As an example, the server receives the third original calendar data "3:30 pm on September 12, XX company holding recruitment in the school gym".

In step 504, the server pushes the third original calendar data to the first calendar client terminal, the first calendar client terminal is logged in by a first user account, and the third calendar client terminal is logged in by a user account associated with the first user account.

After receiving the third original calendar data distributed by the third calendar client terminal, the server can push the third original calendar data to the first calendar client terminal. Where, the first calendar client terminal is a calendar client terminal logged in by the first user account, and the first user account is associated with the user account logging in the third calendar client terminal. As an example, the server pushes the third original calendar data "3:30 pm on September 12, XX company holding recruitment in the school gym" to the first calendar client terminal.

It should be noted that in an embodiment of the present invention, a user account logging in the first calendar client terminal is a first user account, and a user account logging in the third calendar client terminal is associated with the first user account. As an example, it is assumed that the first user account is xiaoxiao 111, and the first user account xiaoxiao 111 is associated with the user account xiaomi123 logging in the third calendar client terminal.

In step 505, the first calendar client terminal receives the third original calendar data pushed by the server.

When the server pushes the third original calendar data to the first calendar client terminal, the first calendar client terminal can receive the third original calendar data pushed by the server. As an example, the first calendar client terminal receive the third original calendar data "3:30 pm on September 12, XX company holding recruitment in the school gym".

In step 506, the first calendar client terminal updates first original calendar data with the third original calendar data to obtain original calendar data.

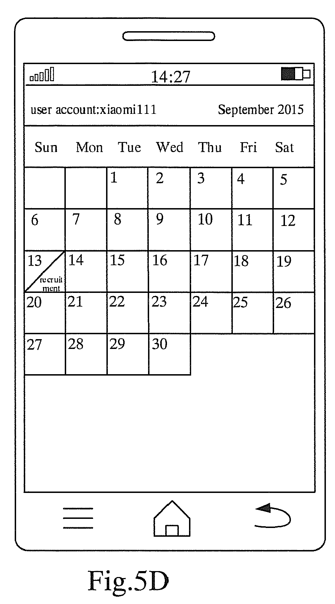

After the first calendar client terminal receives the third original calendar data pushed by the server, the first calendar client terminal can update the first original calendar data with the third original calendar data to obtain original calendar data. Where, the first original calendar data is obtained by the first calendar client terminal adding corresponding event data to a designated date page on a calendar interface displayed on the first calendar client terminal. As an example, the first original calendar data can be "3:30 pm on September 13, XX company holding recruitment in the school gym", the calendar interface displayed on the first calendar client terminal can be as shown in Fig. 5D. Where, the details of Fig. 5D can refer to the details of Fig. 5B, which will not be repeated herein. As an example, the first calendar client terminal updates the first original calendar data "3:30 pm on September 13, XX company holding recruitment in the school gym" with the third original calendar data "3:30 pm on September 12, XX company holding recruitment in the school gym".

In the embodiment of the present invention, the first calendar client terminal can update the first original calendar data with the third original calendar data to obtain original calendar data through one of the following two manners.

First Manner: the first calendar client terminal replaces the first original calendar data with the third original calendar data to obtain the original calendar data.

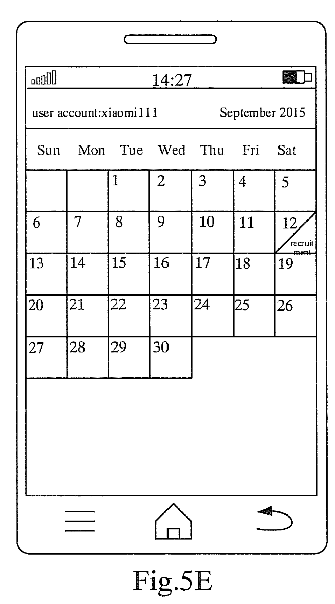

As an example, the first calendar client terminal can determine the date data and the event data in the third original calendar data, and then adds the event data in the third original calendar data to a date page corresponding to the date data in the original calendar data, and deletes the first original calendar data, to obtain the original calendar data. Where, the original calendar data is exactly the third original calendar data. As an example, the first calendar client terminal replaces the first original calendar data "3:30 pm on September 13, XX company holding recruitment in the school gym" with the third original calendar data to obtain the original calendar data as shown in the interface of Fig. 5E. Referring to Fig. 5E, the original calendar data can be "3:30 pm on September 12, XX company holding recruitment in the school gym".

Second Manner: the first calendar client terminal incorporates the third original calendar data into the first original calendar data to obtain the original calendar data.

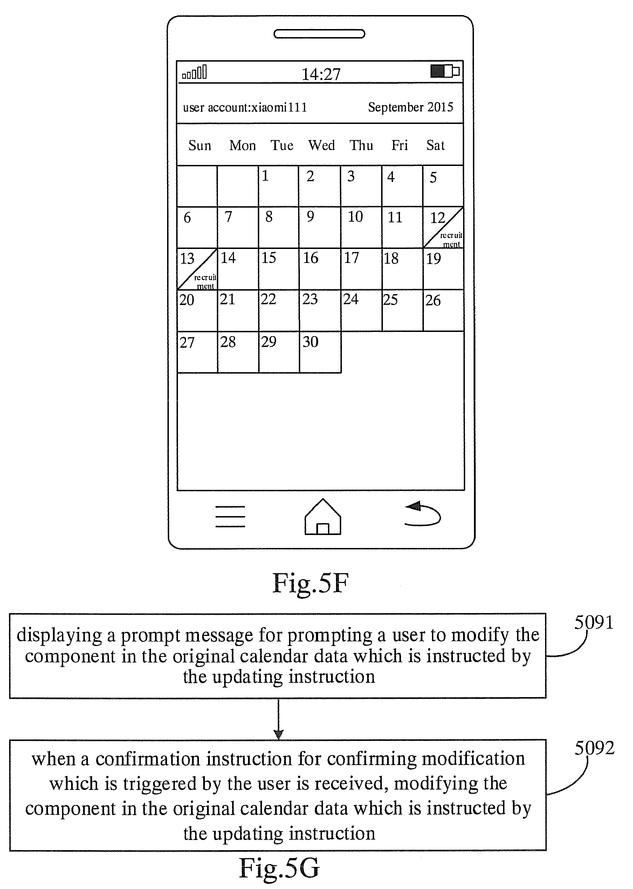

As an example, the first calendar client terminal can determine the date data and the event data in the third original calendar data, and then adds the event data in the third original calendar data to a date page corresponding to the date data in the original calendar data, to obtain the original calendar data. As an example, the first calendar client terminal incorporates the third original calendar data "3:30 pm on September 12, XX company holding recruitment in the school gym" into the first original calendar data to obtain the original calendar data "3:30 pm on September 13, XX company holding recruitment in the school gym" to obtain the original calendar data as shown in the interface of Fig. 5F. Referring to Fig. 5F, the original calendar data can be "3:30 pm on September 12, XX company holding recruitment in the school gym" and "3:30 pm on September 13, XX company holding recruitment in the school gym".

It should be noted that, in the present embodiment, merely as an example, the original calendar data is obtained by the first calendar client terminal updating the first original calendar data with the third original calendar data. While in practical application, the original calendar data can also be obtained by the first calendar client terminal adding corresponding event data to a designated date page on a calendar interface displayed on the first calendar client terminal. Where, the process of the first calendar client terminal adding corresponding event data to a designated date page on a calendar interface displayed on the first calendar client terminal is similar to the process of the third calendar client terminal adding corresponding event data to a designated date page on a calendar interface displayed on the third calendar client terminal in step 501, and the details can refer to step 501, which will not be repeated herein. It should be further noted that in the present embodiment, as an example, after step 506, the original calendar data is "3:30 pm on September 12, XX company holding recruitment in the school gym".

In step 507, the first calendar client terminal displays the original calendar data.

After the first calendar client terminal receives the original calendar data pushed by the server, the first calendar client terminal can display the original calendar data. As an example, the first calendar client terminal displays the original calendar data "3:30 pm on September 12, XX company holding recruitment in the school gym".

It should be noted that when the first calendar client terminal displays the original calendar data, the first calendar client terminal can add the event data in the original calendar data to a date page corresponding to a date indicated in the date data of the original calendar data, and present the event data on the interface displayed on the first calendar client terminal. This is not limited by the embodiment of the present invention.

In step 508, the first calendar client terminal receives an updating instruction for updating the original calendar data.

In the embodiment of the present invention, the original calendar data may have data inconsistent with practical situation, resulting in a low accuracy of the original calendar data. As an example, it is assumed that the recruitment of the XX company will be held in the school gym at 3:30 pm on September 15, while the original calendar data displayed on the first calendar client terminal shows "3:30 pm on September 12, XX company holding recruitment in the school gym". Therefore, the original calendar data has a low accuracy. However, in the embodiment of the present invention, after the first calendar client terminal displays the original calendar data, the user of the first calendar client terminal can update the original calendar data. As an example, the user of the first calendar client terminal can modify the content of the original calendar data, or can add new data to the original calendar data. This is not limited by the embodiment of the present invention.

When the user of the first calendar client terminal modifies the contents of the original calendar data or adds new data to the original calendar data, an updating instruction with respect to the original calendar data can be triggered. The first calendar client terminal can receive the updating instruction. As an example, the first calendar client terminal receives an updating instruction with respect to the original calendar data "3:30 pm on September 12, XX company holding recruitment in the school gym".

In step 509, according to the updating instruction, the first calendar client terminal modifies a component of the original calendar data which is instructed by the updating instruction to obtain shared calendar data.

After the first calendar client terminal receives the updating instruction triggered by the user of the first calendar client terminal, according to the updating instruction, the first calendar client terminal can modify a component of the original calendar data which is instructed by the updating instruction to obtain shared calendar data.

As an example, referring to Fig. 5G, which shows a flow chart of the process of the first calendar client terminal, according to the updating instruction, modifying a component of the original calendar data which is instructed by the updating instruction to obtain shared calendar data, provided by the embodiment as shown in Fig. 5A. As shown in Fig. 5G, the process can include the following steps.

In step 5091, the first calendar client terminal displays a prompt message for prompting a user to modify the component in the original calendar data which is instructed by the updating instruction.

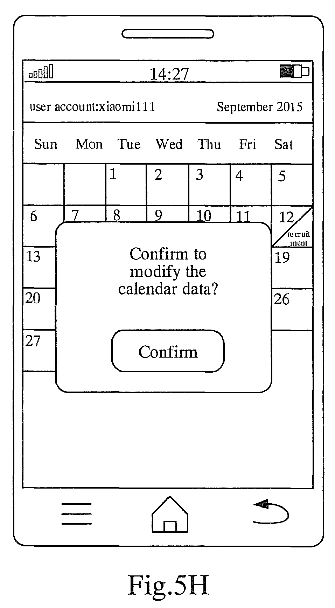

When the first calendar client terminal receives the updating instruction triggered by the user, the first calendar client terminal can display a prompt message. The prompt message is for prompting the user to modify the component in the original calendar data which is instructed by the updating instruction. As an example, the prompt message can be "Confirm to modify the calendar data?" The interface of the first calendar client terminal which displays the prompt message can be as shown in Fig. 5H. Referring to Fig. 5H, the calendar interface displays a prompting interface with a prompt message "Confirm to modify the calendar data?" and a button "Confirm".

In step 5092, when a confirmation instruction for confirming modification which is triggered by the user is received, the first calendar client terminal modifies the component in the original calendar data which is instructed by the updating instruction.

After the first calendar client terminal displays the prompt message, the user can operate on the prompt message to trigger a confirmation instruction for confirming modification. As an example, the user clicks the button "Confirm" as shown in Fig. 5H, and triggers a confirmation instruction for confirming modification. When the first calendar client terminal receives the triggered instruction, the first calendar client terminal can modify the component in the original calendar data which is instructed by the updating instruction.

Where, the original calendar data can include date data and event data, and the event data indicates an event occurring on a date corresponding to the date data. Therefore, the first calendar client terminal, according to the updating instruction, modifying a component of the original calendar data which is instructed by the updating instruction to obtain shared calendar data can include: the first calendar client terminal modifying at least one of the date data and the event data according to the updating instruction. That is, the first calendar client terminal can modify the event data in the original calendar data, or can modify the date data in the original calendar data. This is not limited by the embodiment of the present invention. In practical application, when the component instructed by the updating instruction is the date data, the first calendar client terminal modifies the date data in the original calendar data, and when the component instructed by the updating instruction is the event data, the first calendar client terminal modifies the event data in the original calendar data.

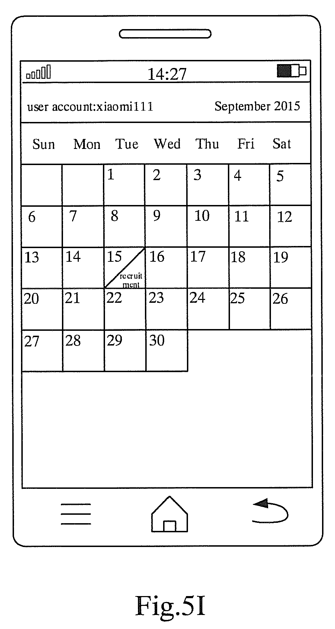

In the embodiment of the present invention, since the date data in the original calendar data is not consistent to the actual date data, the first calendar client terminal can modify the date data in the original calendar data according to the updating instruction, to obtain shared calendar data. As an example, the first calendar client terminal can modify the date data in the original calendar data to obtain the shared calendar data "3:30 pm on September 15, XX company holding recruitment in the school gym". The first calendar client terminal, according to the updating instruction, modifies the component of the original calendar data which is instructed by the updating instruction to obtain shared calendar data, as shown in the interface of Fig. 5I.

In step 510, the first calendar client terminal distributes the shared calendar data to the server.

After the first calendar client terminal modifies the original calendar data to obtain the shared calendar data, the first calendar client terminal can distribute the shared calendar data to the server. As an example, the first calendar client terminal distributes the shared calendar data "3:30 pm on September 15, XX company holding recruitment in the school gym" to the server.

In step 511, the server receives the shared calendar data distributed by the first calendar client terminal.

When the first calendar client terminal distributes the shared calendar data to the server, the server can receives the shared calendar data distributed by the first calendar client terminal. As an example, the server receives the shared calendar data "3:30 pm on September 15, XX company holding recruitment in the school gym" distributed by the first calendar client terminal.

In step 512, the server acquires a second user account associated with the first user account.

After the server receives the shared calendar data distributed by the first calendar client terminal, the server can acquire a second user account associated with the first user account. As an example, the server acquires a user account associated with the first user account "xiaoxiao111".

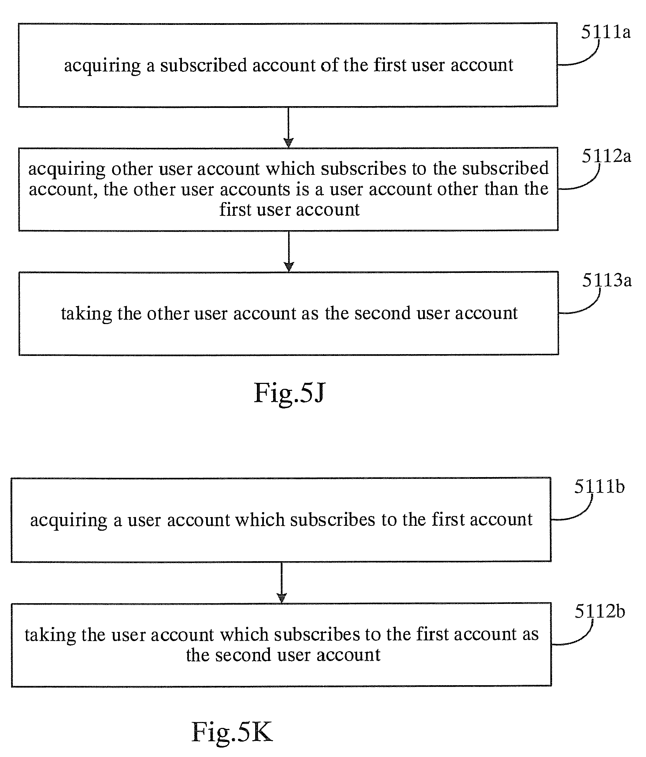

In the embodiment of the present invention, user accounts subscribing to the same user account can be user accounts associated with one another. Therefore, the server can determine the second user account associated with the first user account based on a subscribed account of the first user account. As an example, Fig. 5J illustrates a flow chart of a process of the server acquiring the second user account associated with the first user account, provided by the embodiment as shown in Fig. 5A. As shown in Fig. 5A0, the process can include the following sub-steps.

In sub-step 5111a, the server acquires a subscribed account of the first user account.

As an example, it is assumed that the subscribed account of the first user account xiaoxiao111 is dingyue1. Then, the server acquires the subscribed account dingyue1.

In the embodiment of the present invention, the server can store corresponding relationship between user accounts and subscribed accounts, and the server can acquire the subscribed account of the first account based on the corresponding relationship between user accounts and subscribed accounts. As an example, the server stores a corresponding relationship between user accounts and subscribed accounts as shown in the following Table 1:

**Table 1**

| User Accounts | Subscribed Accounts |
|---|---|
| xiaoxiao111 | dingyue1 |
| xiaomi111 | |
| Xiaomi112 | |
| Xiaomi112 | dingyue2 |
| Xiaomii001 | |
| Xiaomii002 | |

The server can search the corresponding relationship as shown in the Table 1 based on the first user account xiaoxiao111, to obtain the subscribed account of the first user account xiaoxiao111 is dingyue1, in turn, to acquire the subscribed account dingyue1.

In sub-step 5112a, the server acquires other user account which subscribes to the subscribed account, the other user accounts is a user account other than the first user account.

After the server acquires the subscribed account of the first user account, the server can acquire other user account which subscribes to the subscribed account, the other user accounts is a user account other than the first user account. As an example, the server acquires other user account which subscribes to the subscribed account dingyue1.

It can be seen from the Table 1, other user accounts which subscribe to the subscribed account include: a user account xiaomi111 and a user account Xiaomi112. The server can, based on the subscribed account dingyue1, search the corresponding relationship as shown in the Table 1, to obtain other user accounts which subscribe to the subscribed account dingyue1 is xiaomi111 and Xiaomi112.

In sub-step 5113a, the server takes the other user account as the second user account.

After the server acquires the other user account which subscribes to the subscribed account, the server takes the other user account as the second user accounts. As an example, the server takes the user accounts xiaomi111 and Xiaomi112 as the second user accounts.

It should be noted from the above that the user account xiaomi111 is a user account logging in the third calendar client terminal. Therefore, for easy description, in the embodiment of the present invention, as an example, the second user account is the user account Xiaomi112.

It can be seen from the Table 1 that the server also stores corresponding relationship among the user account Xiaomi112, Xiaomii001, Xiaomii002 and a subscribed account dingyue2. Where, Xiaomi112, Xiaomii001 and Xiaomii002 all subscribes to the subscribed account dingyue2, which will not be elaborated in the embodiment of the present invention.

In the embodiment of the present invention, a user account subscribing to the first user account can be a user account associated with the first user account. Therefore, the server can determine a user account subscribing to the first user account, and take the user account subscribing to the first user account as the second user account. As an example, Fig. 5K illustrates a flow chart of another process of the server acquiring the second user account associated with the first user account, provided by the embodiment as shown in Fig. 5A. As shown in Fig. 5A1, the process can include the following sub-steps.

In sub-step 5111b, the server acquires a user account which subscribes to the first account.

In the embodiment of the present invention, the server can store a corresponding relationship between user accounts and subscribed accounts. The server can acquire a user account which subscribes to the first account. As an example, the server stores a corresponding relationship between user accounts and subscribed accounts as shown in the following Table 2:

**Table 2**

| User Accounts | Subscribed Account (First User Account) |
|---|---|
| xiaomi111 | xiaoxiao111 |
| Xiaomi112 | |
| Xiaomii002 | |

The server can search the corresponding relationship as shown in the Table 2, and obtain a user account which subscribes to the first user account xiaoxiao111. As shown in the Table 2, the user accounts which subscribe to the first user account xiaoxiao111 include: Xiaomi111, Xiaomi112 and Xiaomii002. Therefore, the server acquires the user accounts Xiaomi111, Xiaomi112 and Xiaomii002.

In sub-step 5112b, the server takes the user account which subscribes to the first account as the second user account.

After the server acquires the user account which subscribes to the first account, the server takes the user account which subscribes to the first account as the second user account. As an example, the server takes the user accounts Xiaomi111, Xiaomi112 and Xiaomii002 as the second user accounts.

It should be noted that, in the embodiment of the present invention, for easy description, as an example, the second user account is the user account Xiaomi112.

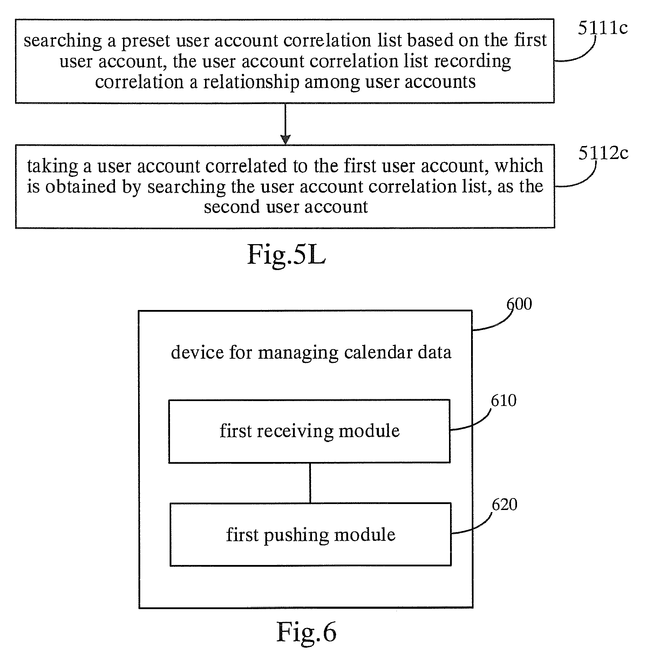

In the embodiment of the present invention, a user account association list can be manually configured, which records association relationship among the user accounts. The server can store the user account association list, and acquire a second user account associated with the first user account according to the user account association list. As an example, Fig. 5L illustrates a flow chart of still another process of the server acquiring the second user account associated with the first user account, provided by the embodiment as shown in Fig. 5A. As shown in Fig. 5A2, the process can include the following sub-steps.

In sub-step 5111c, the server searches a preset user account association list based on the first user account, the user account association list recording association a relationship among user accounts.

As an example, the preset user account association list can be shown in the following Table 3.

**Table 3**

| User Accounts | Associated Accounts |
|---|---|
| xiaoxiao111 | Xiaomi112 |
| | xiaomi111 |
| Xiaomii001 | Xiaomii002 |

As shown in the Table 3, the server stores user accounts xiaoxiao111 and Xiaomii001. Where, the user account xiaoxiao111 is associated with the user accounts Xiaomi112 and xiaomi111, and the user account Xiaomii001 is associated with the user account Xiaomii002.

The server searches the user account association list as shown in Fig. 3 based on the first user account xiaoxiao111, and determines that the first user account xiaoxiao111 is associated with the user accounts Xiaomi112 and xiaomi111.

In sub-step 5112c, the server takes a user account associated with the first user account, which is obtained by searching the user account association list, as the second user account.

After the server finds a user accounts associated with the first user account, the server takes the user account associated with the first user account as the second user account. As an example, the server takes the user accounts Xiaomi112 and xiaomi111 as the second user accounts.

It should be noted that for easy description, in the embodiment of the present invention, as an example, the second user account is the user account Xiaomi112.

In step 513, the server pushes the shared calendar data to the second calendar client terminal, the second calendar client terminal being a calendar client terminal logged in by the second user account.

After the server acquires the second user account associated with the first user account, the server pushes the shared calendar data to the second calendar client terminal. Where, the second calendar client terminal is a calendar client terminal logged in by the second user account. As an example, the second calendar client terminal is logged in by a user account Xiaomi112, and the server pushes the shared calendar data "3:30 pm on September 15, XX company holding recruitment in the school gym" to the second calendar client terminal.

In step 514, the second calendar client terminal receives the shared calendar data pushed by the server.

When the server pushes the shared calendar data to the second calendar client terminal, the second calendar client terminal can receives the shared calendar data pushed by the server. As an example, the second calendar client terminal receives the shared calendar data "3:30 pm on September 15, XX company holding recruitment in the school gym" pushed by the server.

In step 515, the second calendar client terminal updates second original calendar data with the shared calendar data.

The step 515 is similar to the above step 506, and the details can refer to the step 506, which will not be repeated in the embodiment of the present invention. However, it should be noted that in step 515, the second original calendar data is obtained by the second calendar client terminal adding corresponding event data to a designated date page on a calendar interface displayed on the second calendar client terminal.

It should be noted that, the order of the steps of the method for managing calendar data provided by the embodiments of the present invention can be varied, and some steps can be added or omitted therefrom. Any variation from the above methods which can be readily conceived by those skilled in the art based on the technical scheme disclosed herein is intended to be covered by the protection scope of the present invention, which will not be elaborated herein.

Accordingly, in the method for managing calendar data provided by the embodiments of the present invention, the server receives shared calendar data distributed by the first calendar client terminal. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

The device embodiments will be described hereinafter, which can be configured to perform the method embodiments. For details of the device embodiments of the present invention which are not disclosed, the method embodiments of the present invention can be referred to.

Fig. 6 is a block diagram of a device 600 for managing calendar data according to an exemplary embodiment. The device 600 for managing calendar data can be implemented with software, hardware or combination of the both to form a part or the entirety of the server 180 in the implementation environment of Fig. 1. As shown in Fig. 6, the device 600 for managing calendar data can include:
a first receiving module 610 configured to receive shared calendar data distributed by a first calendar client terminal, the shared calendar data being obtained by the first calendar client terminal modifying original calendar data displayed on the first calendar client terminal; and
a first pushing module 620 configured to push the shared calendar data received by the first receiving module 610 to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal, wherein the second calendar client terminal is a calendar client terminal logged in by a second user account, the first calendar client terminal is a calendar client terminal logged in by a first user account, and the second user account is associated with the first user account.

Accordingly, in the device for managing calendar data provided by the embodiment of the present invention, the server receives shared calendar data distributed by the first calendar client terminal. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

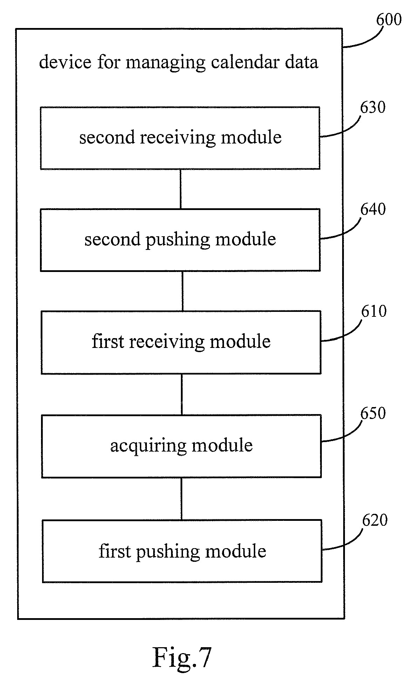

Fig. 7 is a block diagram of another device 600 for managing calendar data according to an exemplary embodiment. The device 600 for managing calendar data can be implemented with software, hardware or combination of the both to form a part or the entirety of the server 180 in the implementation environment of Fig. 1. As shown in Fig. 7, the device 600 for managing calendar data can include:
a first receiving module 610 configured to receive shared calendar data distributed by a first calendar client terminal, the shared calendar data being obtained by the first calendar client terminal modifying original calendar data displayed on the first calendar client terminal; and
a first pushing module 620 configured to push the shared calendar data received by the first receiving module 610 to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal, wherein the second calendar client terminal is a calendar client terminal logged in by a second user account, the first calendar client terminal is a calendar client terminal logged in by a first user account, and the second user account is associated with the first user account.

Optionally, the original calendar data is obtained by the first calendar client terminal updating first original calendar data with third calendar data, the third calendar data is obtained by a third calendar client terminal adding corresponding event data to a designated date page on a calendar interface displayed on the third calendar client terminal and distributed to a server for the server to push the third original calendar data to the first calendar client terminal. The first original calendar data is obtained by the first calendar client terminal adding corresponding event data to a designated date page on a calendar interface displayed on the first calendar client terminal. The original calendar data contains date data and event data, and the event data indicates an event occurring on a date corresponding to the date data. Also as shown in Fig. 7, the device 600 for managing calendar data can further include:
a second receiving module 630 configured to receive the third original calendar data distributed by the third calendar client terminal, the third calendar client terminal is logged in by a user account associated with the first user account; and
a second pushing module 640 configured to push the third original calendar data received by the second receiving module 630 to the first calendar client terminal.

Optionally, the original calendar data is obtained by the first calendar client terminal adding corresponding event data to a designated date page on a calendar interface displayed on the first calendar client terminal, and the original calendar data contains date data and the event data, and the event data indicates an event occurring on a date corresponding to the date data.

Optionally, also as shown in Fig. 7, the device 600 for managing calendar data can further include:
an acquiring module 650 configured to acquire the second user account associated with the first user account.

Optionally, the acquiring module 650 is configured to:
acquire a subscribed account to which the first user account subscribes;
acquire another user account which subscribes to the subscribed account, said another user account is a user account other than the first user account; and
take said another user account as the second user account.

Optionally, the acquiring module 650 is configured to:
acquire a user account which subscribes to the first account; and
take the user account which subscribes to the first account as the second user account.

Optionally, the acquiring module 650 is configured to:
search a preset user account association list based on the first user account, the user account association list recording association relationship among user accounts; and
take a user account searched from the user account association list and associated with the first user account, as the second user account.

Accordingly, in the device for managing calendar data provided by the embodiment of the present invention, the server receives shared calendar data distributed by the first calendar client terminal. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

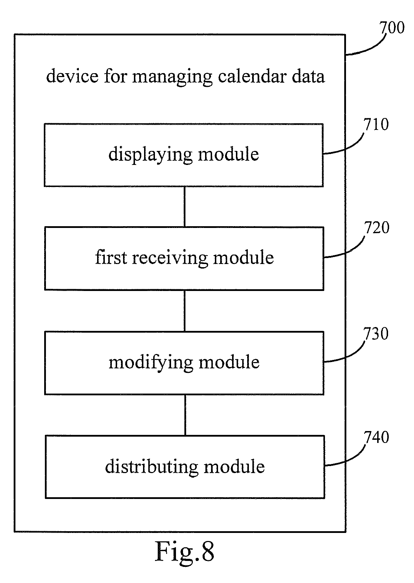

Fig. 8 is a block diagram of another device 700 for managing calendar data according to another exemplary embodiment. The device 700 for managing calendar data can be implemented with software, hardware or combination of the both to form a part or the entirety of a first calendar client terminal which is a calendar client terminal on the first terminal 120 in the implementation environment of Fig. 1. As shown in Fig. 8, the device 700 for managing calendar data can include:
a displaying module 710 configured to display original calendar data;
a first receiving module 720 configured to receive an updating instruction for updating the original calendar data displayed by the displaying module 710;
a modifying module 730 configured to, according to the updating instruction received by the first receiving module 720, modify a component of the original calendar data which is instructed by the updating instruction, to obtain shared calendar data;
a distributing module 740 configured to distribute the shared calendar data obtained by the modifying module 730 to a server, for the server to push the shared calendar data to a second calendar client terminal, wherein the second calendar client terminal is a calendar client terminal logged in by a second user account, a first calendar client terminal is a calendar client terminal logged in by a first user account, and the second user account is associated with the first user account.

Accordingly, in the device for managing calendar data provided by the embodiment of the present invention, the first calendar client terminal displays original calendar data; receives an updating instruction for updating the original calendar data; according to the updating instruction, modifies a component of the original calendar data which is instructed by the updating instruction, to obtain shared calendar data; and distributes the shared calendar data to a server, for the server to push the shared calendar data to a second calendar client terminal. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

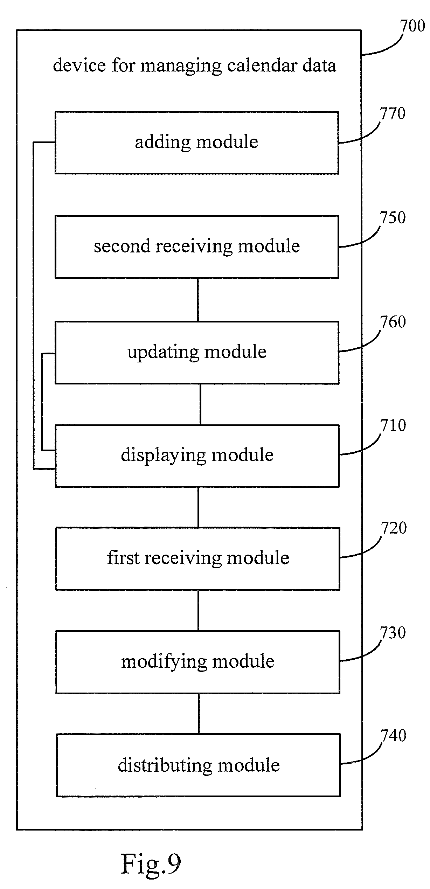

Fig. 9 is a block diagram of another device 700 for managing calendar data according to another exemplary embodiment. The device 700 for managing calendar data can be implemented with software, hardware or combination of the both to form a part or the entirety of a first calendar client terminal which is a calendar client terminal on the first terminal 120 in the implementation environment of Fig. 1. As shown in Fig. 9, the device 700 for managing calendar data can include:
a displaying module 710 configured to display original calendar data;
a first receiving module 720 configured to receive an updating instruction for updating the original calendar data displayed by the displaying module 710;
a modifying module 730 configured to, according to the updating instruction received by the first receiving module 720, modify a component of the original calendar data which is instructed by the updating instruction, to obtain shared calendar data;
a distributing module 740 configured to distribute the shared calendar data obtained by the modifying module 730 to a server, for the server to push the shared calendar data to a second calendar client terminal, wherein the second calendar client terminal is a calendar client terminal logged in by a second user account, a first calendar client terminal is a calendar client terminal logged in by a first user account, and the second user account is associated with the first user account.

Optionally, the modifying module 730 is configured to:
display a prompt message for prompting a user to modify the component in the original calendar data which is instructed by the updating instruction; and
upon a confirmation instruction for confirming modification which is triggered by the user being received, modify the component in the original calendar data which is instructed by the updating instruction.

Optionally, the original calendar data contains date data and event data, and the event data indicates an event occurring on a date corresponding to the date data, and
the modifying module 730 is configured to modify at least one of the date data and the event data according to the updating instruction.

Optionally, also as shown in Fig. 9, the device 700 for managing calendar data can further include:
a second receiving module 750 configured to receive third original calendar data pushed by the server, wherein the third original calendar data is obtained by a third calendar client terminal adding corresponding event data to a designated date page on a calendar interface displayed on the third calendar client terminal and distributed to a server for the server, and the third calendar client terminal is logged in by a user account associated with the first user account.

Optionally, also as shown in Fig. 9, the device 700 for managing calendar data can further include:
an updating module 760 configured to update first original calendar data with the third original calendar data received by the second receiving module 750, to obtain the original calendar data, wherein the first original calendar data is obtained by the first calendar client terminal adding corresponding event data to a designated date page on a calendar interface displayed on the first calendar client terminal.

Optionally, the updating module 760 is configured to:
replace the first original calendar data with the third original calendar data received by the second receiving module 750, to obtain the original calendar data.

Optionally, the updating module 760 is configured to:
incorporate the third original calendar data received by the second receiving module 750 into the first original calendar data, to obtain the original calendar data.

Optionally, also as shown in Fig. 9, the device 700 for managing calendar data can further include:
an adding module 770 configured to add corresponding event data to a designated date page on a calendar interface displayed on the first calendar client terminal, to obtain the original calendar data.

Accordingly, in the device for managing calendar data provided by the embodiment of the present invention, the first calendar client terminal displays original calendar data; receives an updating instruction for updating the original calendar data; according to the updating instruction, modifies a component of the original calendar data which is instructed by the updating instruction, to obtain shared calendar data; and distributes the shared calendar data to a server, for the server to push the shared calendar data to a second calendar client terminal. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

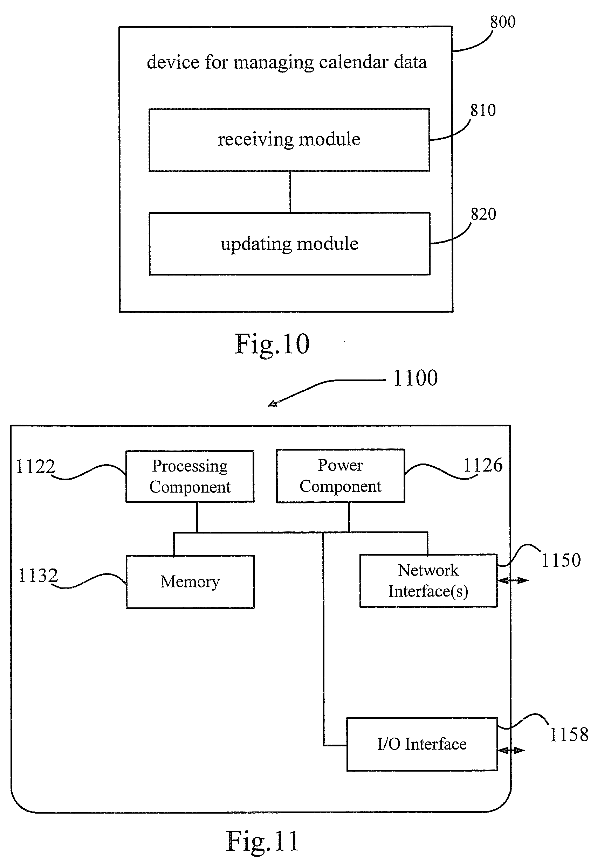

Fig. 10 is a block diagram of a device 800 for managing calendar data according to still another exemplary embodiment. The device 800 for managing calendar data can be implemented with software, hardware or combination of the both to form a part or the entirety of a second calendar client terminal which is a calendar client terminal on the second terminal 140 in the implementation environment of Fig. 1. As shown in Fig. 10, the device 800 for managing calendar data can include:
a receiving module 810 configured to receive shared calendar data pushed by the server, the shared calendar data being pushed by the server to a second calendar client terminal after the server receives the shared calendar data distributed by a first calendar client terminal, the second calendar client terminal being a calendar client terminal logged in by a second user account, the first calendar client terminal being a calendar client terminal logged in by a first user account, the second user account being associated with the first user account, and the shared calendar data being obtained by the first calendar client terminal modifying original calendar data displayed on the first calendar client terminal; and
an updating module 820 configured to update second original calendar data with the shared calendar data received by the receiving module 810, the second original calendar data being obtained by the second calendar client terminal adding corresponding event data to a designated date page on a calendar interface displayed on the second calendar client terminal.

Optionally, the updating module 820 is configured to:
replace the second original calendar data with the shared calendar data received by the receiving module 810.

Optionally, the updating module 820 is configured to:
incorporate the shared calendar data received by the receiving module 810 into the second original calendar data.

Accordingly, in the device for managing calendar data provided by the embodiment of the present invention, the second calendar client terminal receives shared calendar data pushed by the server, and updates second original calendar data with the shared calendar data. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

Fig. 11 is a block diagram of a device 1100 for managing calendar data according to an exemplary embodiment. For example, the device 1100 may be provided as a server. Referring to Fig. 11, the device 1100 includes a processing component 1122 that further includes one or more processors, and memory resources represented by a memory 1132 for storing instructions executable by the processing component 1122, such as application programs. The application programs stored in the memory 1132 may include one or more modules each corresponding to a set of instructions. Further, the processing component 1122 is configured to execute the instructions to perform the above described method for managing calendar data. The method includes:
receiving shared calendar data distributed by a first calendar client terminal, the shared calendar data being obtained by the first calendar client terminal modifying original calendar data displayed on the first calendar client terminal; and
pushing the shared calendar data to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal,
wherein the second calendar client terminal is a calendar client terminal logged in by a second user account, the first calendar client terminal is a calendar client terminal logged in by a first user account, and the second user account is associated with the first user account.

Optionally, the original calendar data is obtained by the first calendar client terminal updating first original calendar data with third calendar data, the third calendar data is obtained by a third calendar client terminal adding corresponding event data to a designated date page on a calendar interface displayed on the third calendar client terminal and distributed to a server for the server to push the third original calendar data to the first calendar client terminal,
the first original calendar data is obtained by the first calendar client terminal adding corresponding event data to a designated date page on a calendar interface displayed on the first calendar client terminal,
the original calendar data contains date data and event data, and the event data indicates an event occurring on a date corresponding to the date data, and
before the shared calendar data distributed by a first calendar client terminal is received, the method further includes:
receiving the third original calendar data distributed by the third calendar client terminal, the third calendar client terminal is logged in by a user account associated with the first user account; and
pushing the third original calendar data to the first calendar client terminal.

Optionally, the original calendar data is obtained by the first calendar client terminal adding corresponding event data to a designated date page on a calendar interface displayed on the first calendar client terminal, and
the original calendar data contains date data and the event data, and the event data indicates an event occurring on a date corresponding to the date data.

Optionally, before the shared calendar data is pushed to the second calendar client terminal, the method further includes:
acquiring the second user account associated with the first user account.

Optionally, acquiring the second user account associated with the first user account includes:
acquiring a subscribed account to which the first user account subscribes;
acquiring another user account which subscribes to the subscribed account, said another user account is a user account other than the first user account; and
taking said another user account as the second user account.

Optionally, acquiring the second user account associated with the first user account includes:
acquiring a user account which subscribes to the first account; and
taking the user account which subscribes to the first account as the second user account.

Optionally, acquiring the second user account associated with the first user account includes:
searching a preset user account association list based on the first user account, the user account association list recording association relationship among user accounts; and
taking a user account searched from the user account association list and associated with the first user account, as the second user account.

The device 1100 may also include a power component 1126 configured to perform power management of the device 1100, wired or wireless network interface(s) 1150 configured to connect the device 1100 to a network, and an input/output (I/O) interface 1158. The device 1100 may operate based on an operating system stored in the memory 1132, such as Windows ServerTM, Mac OS XTM, UnixTM, LinuxTM, FreeBSDTM, or the like.

Accordingly, in the device for managing calendar data provided by the embodiment of the present invention, shared calendar data distributed by the first calendar client terminal is received. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

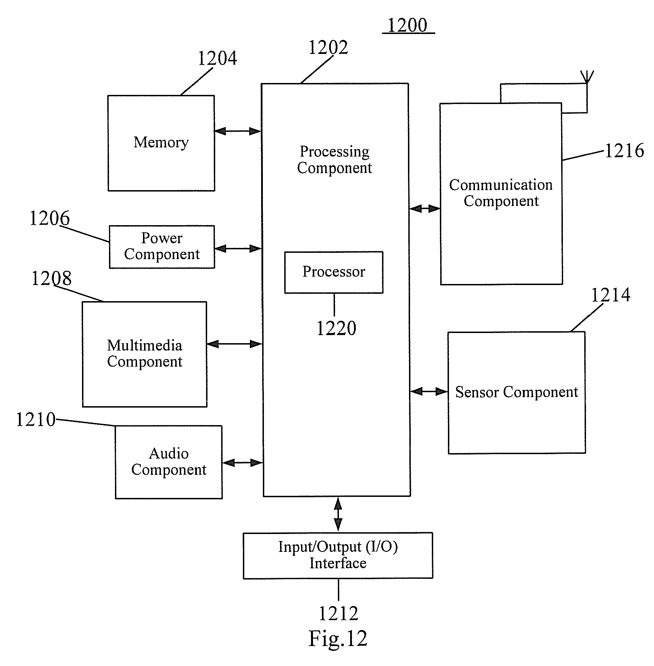

Fig. 12 is a block diagram of a device 1200 for managing calendar data according to an exemplary embodiment. For example, the device 1200 for managing calendar data can be a mobile phone, a computer, a digital broadcast terminal, a messaging device, a gaming console, a tablet, a medical device, exercise equipment, a personal digital assistant, and the like. The device 1200 for managing calendar data can be installed with a calendar client terminal through which the device 1200 for managing calendar data can achieve management to calendar data.

Referring to Fig. 12, the device 1200 can include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, data communications and recording operations. The processing component 1202 can include one or more processors 1220 to execute instructions to perform all or part of the steps in the above described methods. Moreover, the processing component 1202 can include one or more modules which facilitate the interaction between the processing component 1202 and other components. For instance, the processing component 1202 can include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, calendar data etc. The memory 1204 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 can include a power management system, one or more power sources, and any other components associated with the generation, management, and distribution of power in the device 1200.

The multimedia component 1208 includes a screen providing an output interface between the device 1200 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action.

The audio component 1210 is configured to send and/or receive audio signals. For example, the audio component 1210 includes a microphone ("MIC") configured to receive an external audio signal when the device 1200 is in an operation mode, such as a recording mode, and a voice recognition mode. The received audio signal can be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons can include, but are not limited to, a home button, a volume button, a starting button, and a locking button.

The sensor component 1214 includes one or more sensors to provide status assessments of various aspects of the device 1200. For instance, the sensor component 1214 can detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 can include a proximity sensor configured to detect the presence of nearby objects without any physical contact. The sensor component 1214 can also include a light sensor, such as a CMOS or CCD image sensor, for use in imaging applications. In some embodiments, the sensor component 1214 can also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium can be a ROM, a RAM, a CD-ROM, a magnetic tape, a floppy disc, an optical data storage device, and the like.

There is provided a non-transitory computer readable storage medium storing instructions, executable by the processor of the device 1200, enabling the device 1200 to perform a method for managing calendar data. The method includes:
displaying original calendar data;
receiving an updating instruction for updating the original calendar data;
according to the updating instruction, modifying a component of the original calendar data which is instructed by the updating instruction, to obtain shared calendar data;
distributing the shared calendar data to a server, for the server to push the shared calendar data to a second calendar client terminal,
wherein the second calendar client terminal is a calendar client terminal logged in by a second user account, a first calendar client terminal is a calendar client terminal logged in by a first user account, and the second user account is associated with the first user account.

Optionally, according to the updating instruction, modifying a component of the original calendar data which is instructed by the updating instruction to obtain shared calendar data includes:
displaying a prompt message for prompting a user to modify the component in the original calendar data which is instructed by the updating instruction; and
upon receiving a confirmation instruction for confirming modification which is triggered by the user, modifying the component in the original calendar data which is instructed by the updating instruction.
Optionally, the original calendar data contains date data and event data, and the event data indicates an event occurring on a date corresponding to the date data, and
according to the updating instruction, modifying a component of the original calendar data which is instructed by the updating instruction to obtain shared calendar data includes:
   modifying at least one of the date data and the event data according to the updating instruction.

Optionally, before the original calendar data is displayed, the method further includes:
receiving third original calendar data pushed by the server,
wherein the third original calendar data is obtained by a third calendar client terminal adding corresponding event data to a designated date page on a calendar interface displayed on the third calendar client terminal and distributed to a server for the server, and
the third calendar client terminal is logged in by a user account associated with the first user account.

Optionally, after the third original calendar data pushed by the server is received, the method further includes:
updating first original calendar data with the third original calendar data, to obtain the original calendar data,
wherein the first original calendar data is obtained by the first calendar client terminal adding corresponding event data to a designated date page on a calendar interface displayed on the first calendar client terminal.

Optionally, updating first original calendar data with the third original calendar data, to obtain the original calendar data includes:
replacing the first original calendar data with the third original calendar data, to obtain the original calendar data.

Optionally, updating first original calendar data with the third original calendar data, to obtain the original calendar data includes:
incorporating the third original calendar data into the first original calendar data, to obtain the original calendar data.

Optionally, before the original calendar data is displayed, the method further includes:
adding corresponding event data to a designated date page on a calendar interface displayed on the first calendar client terminal, to obtain the original calendar data.

Accordingly, in the device for managing calendar data provided by the embodiment of the present invention, original calendar data is displayed; an updating instruction for updating the original calendar data is received; according to the updating instruction, a component of the original calendar data which is instructed by the updating instruction is modified, to obtain shared calendar data; and distributes the shared calendar data to a server, for the server to push the shared calendar data to a second calendar client terminal. Thereby, since the shared calendar data pushed to the second calendar client terminal by the server is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.

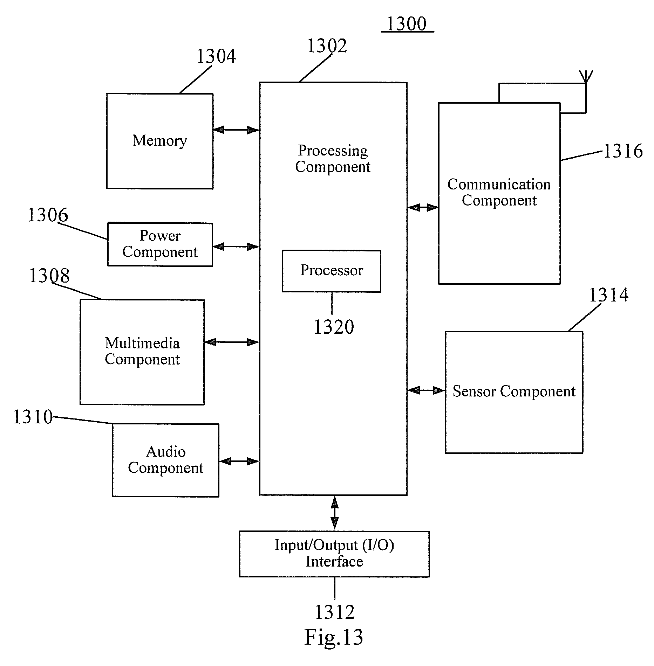

Fig. 13 is a block diagram of a device 1300 for managing calendar data according to an exemplary embodiment. For example, the device 1300 for managing calendar data can be a mobile phone, a computer, a digital broadcast terminal, a messaging device, a gaming console, a tablet, a medical device, exercise equipment, a personal digital assistant, and the like. The device 1300 for managing calendar data can be installed with a calendar client terminal through which the device 1300 for managing calendar data can achieve management to calendar data.

Referring to Fig. 13, the device 1300 can include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, data communications and recording operations. The processing component 1302 can include one or more processors 1320 to execute instructions to perform all or part of the steps in the above described methods. Moreover, the processing component 1302 can include one or more modules which facilitate the interaction between the processing component 1302 and other components. For instance, the processing component 1302 can include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, calendar data etc. The memory 1304 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 can include a power management system, one or more power sources, and any other components associated with the generation, management, and distribution of power in the device 1300.

The multimedia component 1308 includes a screen providing an output interface between the device 1300 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action.

The audio component 1310 is configured to send and/or receive audio signals. For example, the audio component 1310 includes a microphone ("MIC") configured to receive an external audio signal when the device 1300 is in an operation mode, such as a recording mode, and a voice recognition mode. The received audio signal can be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons can include, but are not limited to, a home button, a volume button, a starting button, and a locking button.

The sensor component 1314 includes one or more sensors to provide status assessments of various aspects of the device 1300. For instance, the sensor component 1314 can detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 can include a proximity sensor configured to detect the presence of nearby objects without any physical contact. The sensor component 1314 can also include a light sensor, such as a CMOS or CCD image sensor, for use in imaging applications. In some embodiments, the sensor component 1314 can also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1320 in the device 1300, for performing the above-described methods. For example, the non-transitory computer-readable storage medium can be a ROM, a RAM, a CD-ROM, a magnetic tape, a floppy disc, an optical data storage device, and the like.

There is provided a non-transitory computer readable storage medium storing instructions executable by the processor of the device 1300, enabling the device 1300 to perform a method for managing calendar data. The method includes:
receiving shared calendar data pushed by the server, the shared calendar data being pushed by the server to a second calendar client terminal after the server receives the shared calendar data distributed by a first calendar client terminal, the second calendar client terminal being a calendar client terminal logged in by a second user account, the second user account being associated with the first user account, and the shared calendar data being obtained by the first calendar client terminal modifying original calendar data displayed on the first calendar client terminal; and
updating second original calendar data with the shared calendar data, the second original calendar data being obtained by the second calendar client terminal adding corresponding event data to a designated date page on a calendar interface displayed on the second calendar client terminal.

Optionally, updating the second original calendar data with the shared calendar data includes:
replacing the second original calendar data with the shared calendar data.

Optionally, updating the second original calendar data with the shared calendar data includes:
incorporating the shared calendar data into the second original calendar data.

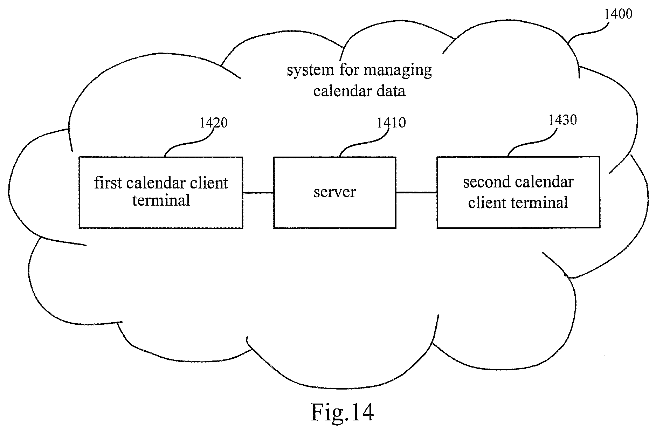

Fig. 14 is a block diagram of a system 1400 for managing calendar data according to an exemplary embodiment. As shown in Fig. 14, the system 1400 for managing calendar data can include: a server 1410, a first calendar client terminal 1420 and a second calendar client terminal 1430.

The server 1410 is a device for managing calendar data as shown in Fig. 6, Fig. 7 or Fig. 11;
the first calendar client terminal 1420 is a device for managing calendar data as shown in Fig. 8, Fig. 9 or Fig. 12; and
the second calendar client terminal 1430 is a device for managing calendar data as shown in Fig. 10 or Fig. 13.

Accordingly, in the system for managing calendar data provided by the embodiments of the present invention, the server receives shared calendar data distributed by the first calendar client terminal. The shared calendar data is obtained by the first calendar client terminal modifying the original calendar data displayed on the first calendar client terminal. The shared calendar data is pushed to the second calendar client terminal, for the second calendar client terminal to update the second original calendar data with the shared calendar data. The second original calendar data is obtained by the second calendar client terminal adding corresponding event data to a designated date page on a calendar interface displayed on the second calendar client terminal. Thereby, since the shared calendar data is obtained by the first calendar client terminal modifying the original calendar data displayed on the first calendar client terminal, it can improve accuracy of the calendar data. Therefore, it can solve the problem in the related art that calendar data management has a low accuracy, leading to an effect of improving the accuracy in calendar data management.
invention

## Claims

1. A method for managing calendar data, which is performed by a server, **characterized in that** the method comprises:
receiving (201) shared calendar data distributed by a first calendar client terminal, the shared calendar data being obtained by the first calendar client terminal modifying original calendar data displayed on the first calendar client terminal; and
pushing (202) the shared calendar data to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal,
wherein the second calendar client terminal is a calendar client terminal logged in by a second user account, the first calendar client terminal is a calendar client terminal logged in by a first user account, and the second user account is associated with the first user account.

2. The method of claim 1, wherein
the original calendar data is obtained by the first calendar client terminal updating first original calendar data with third calendar data, the third calendar data is obtained by a third calendar client terminal adding corresponding event data to a designated date page on a calendar interface displayed on the third calendar client terminal and distributed to a server for the server to push the third original calendar data to the first calendar client terminal,
the first original calendar data is obtained by the first calendar client terminal adding corresponding event data to a designated date page on a calendar interface displayed on the first calendar client terminal,
the original calendar data contains date data and event data, and the event data indicates an event occurring on a date corresponding to the date data, and
before receiving the shared calendar data distributed by a first calendar client terminal, the method further comprises:
receiving the third original calendar data distributed by the third calendar client terminal, the third calendar client terminal is logged in by a user account associated with the first user account; and
pushing the third original calendar data to the first calendar client terminal.

3. The method of claim 1, wherein
the original calendar data is obtained by the first calendar client terminal adding corresponding event data to a designated date page on a calendar interface displayed on the first calendar client terminal, and
the original calendar data contains date data and the event data, and the event data indicates an event occurring on a date corresponding to the date data.

4. The method of any one of claims 1-3, wherein before the shared calendar data is pushed to the second calendar client terminal, the method further comprises:
acquiring the second user account associated with the first user account, and
wherein acquiring the second user account associated with the first user account comprises:
acquiring a subscribed account to which the first user account subscribes;
acquiring another user account which subscribes to the subscribed account, said another user account being a user account other than the first user account; and
taking said another user account as the second user account, or
wherein acquiring the second user account associated with the first user account comprises:
acquiring a user account which subscribes to the first account; and
taking the user account which subscribes to the first account as the second user account, or
wherein acquiring the second user account associated with the first user account comprises:
searching a preset user account association list based on the first user account, the user account association list recording association relationship among user accounts; and
taking a user account searched from the user account association list and associated with the first user account, as the second user account.

5. A method for managing calendar data, which is performed by a terminal, **characterized in that** the method comprises:
displaying (301) original calendar data;
receiving (302) an updating instruction for updating the original calendar data;
according to the updating instruction, modifying (303) a component of the original calendar data which is instructed by the updating instruction, to obtain shared calendar data;
distributing (304) the shared calendar data to a server, for the server to push the shared calendar data to a second calendar client terminal,
wherein the second calendar client terminal is a calendar client terminal logged in
by a second user account, a first calendar client terminal is a calendar client terminal logged in by a first user account, and the second user account is associated with the first user account.

6. The method of claim 5, wherein according to the updating instruction, modifying a component of the original calendar data which is instructed by the updating instruction to obtain shared calendar data comprises:
displaying a prompt message for prompting a user to modify the component in the original calendar data which is instructed by the updating instruction; and
upon receiving a confirmation instruction for confirming modification which is triggered by the user, modifying the component in the original calendar data which is instructed by the updating instruction.

7. The method of claim 5 or 6, wherein
the original calendar data contains date data and event data, and the event data indicates an event occurring on a date corresponding to the date data, and
according to the updating instruction, modifying a component of the original calendar data which is instructed by the updating instruction to obtain shared calendar data comprises:
modifying at least one of the date data and the event data according to the updating instruction.

8. The method of any one of claims 5 to 7, wherein before the original calendar data is displayed, the method further comprises:
receiving third original calendar data pushed by the server,
wherein the third original calendar data is obtained by a third calendar client terminal adding corresponding event data to a designated date page on a calendar interface displayed on the third calendar client terminal and distributed to a server for the server, and
the third calendar client terminal is logged in by a user account associated with the first user account.

9. The method of claim 8, wherein after the third original calendar data pushed by the server is received, the method further comprises:
updating first original calendar data with the third original calendar data, to obtain the original calendar data,
wherein the first original calendar data is obtained by the first calendar client terminal adding corresponding event data to a designated date page on a calendar interface displayed on the first calendar client terminal, and
wherein updating first original calendar data with the third original calendar data, to obtain the original calendar data comprises:
replacing the first original calendar data with the third original calendar data, to obtain the original calendar data, or
wherein updating first original calendar data with the third original calendar data, to obtain the original calendar data comprises:
incorporating the third original calendar data into the first original calendar data, to obtain the original calendar data.

10. The method of any one of claims 5 to 9, wherein before the original calendar data is displayed, the method further comprises:
adding corresponding event data to a designated date page on a calendar interface displayed on the first calendar client terminal, to obtain the original calendar data.

11. A device (600) for managing calendar data, for example a server, **characterized in that** the device (600) comprises:
a first receiving module (610) configured to receive shared calendar data distributed by a first calendar client terminal, the shared calendar data being obtained by the first calendar client terminal modifying original calendar data displayed on the first calendar client terminal; and
a first pushing module (620) configured to push the shared calendar data to a second calendar client terminal for the second calendar client terminal to update second original calendar data with the shared calendar data, the second original calendar data being obtained by the second calendar client terminal adding corresponding event data to a designated date page on a calendar interface displayed on the second calendar client terminal,
wherein the second calendar client terminal is a calendar client terminal logged in by a second user account, the first calendar client terminal is a calendar client terminal logged in by a first user account, and the second user account is associated with the first user account.

12. The device (600) of claim 11, wherein
the original calendar data is obtained by the first calendar client terminal updating first original calendar data with third calendar data, the third calendar data is obtained by a third calendar client terminal adding corresponding event data to a designated date page on a calendar interface displayed on the third calendar client terminal and distributed to a server for the server to push the third original calendar data to the first calendar client terminal,
the first original calendar data is obtained by the first calendar client terminal adding corresponding event data to a designated date page on a calendar interface displayed on the first calendar client terminal,
the original calendar data contains date data and event data, and the event data indicates an event occurring on a date corresponding to the date data, and
the device (600) further comprises:
a second receiving module (630) configured to receive the third original calendar data distributed by the third calendar client terminal, the third calendar client terminal is logged in by a user account associated with the first user account; and
a second pushing module (640) configured to push the third original calendar data to the first calendar client terminal.

13. A device (700) for managing calendar data, for example a terminal, **characterized in that** the device comprises:
a displaying module (710) configured to display original calendar data;
a first receiving module (720) configured to receive an updating instruction for updating the original calendar data;
a modifying module (730) configured to, according to the updating instruction, modify a component of the original calendar data which is instructed by the updating instruction, to obtain shared calendar data;
a distributing module (740) configured to distribute the shared calendar data to a server, for the server to push the shared calendar data to a second calendar client terminal,
wherein the second calendar client terminal is a calendar client terminal logged in by a second user account, a first calendar client terminal is a calendar client terminal logged in by a first user account, and the second user account is associated with the first user account.

14. The device (700) of claim 13, wherein the modifying module (730) is configured to:
display a prompt message for prompting a user to modify the component in the original calendar data which is instructed by the updating instruction; and
upon a confirmation instruction for confirming modification which is triggered by the user being received, modify the component in the original calendar data which is instructed by the updating instruction.

15. A system for managing calendar data, comprising: a server, a first calendar client terminal and a second calendar client terminal, **characterized in that**
the server is a device for managing calendar data of any one of claims 11-12;
the first calendar client terminal is a device for managing calendar data of any one of claims 13-14; and
the second calendar client terminal is a device (800) for managing calendar datacomprising:
a receiving module (810) configured to receive shared calendar data pushed by the server, the shared calendar data being pushed by the server to a second calendar client terminal after the server receives the shared calendar data distributed by a first calendar client terminal, the second calendar client terminal being a calendar client terminal logged in by a second user account, the first calendar client terminal being a calendar client terminal logged in by a first user account, the second user account being correlated to the first user account, and the shared calendar data being obtained by the first calendar client terminal modifying original calendar data displayed on the first calendar client terminal; and
an updating module (820) configured to update second original calendar data with the shared calendar data, the second original calendar data being obtained by the second calendar client terminal adding corresponding event data to a designated date page on a calendar interface displayed on the second calendar client terminal.
